# EUROPEAN PATENT APPLICATION

(11) **EP 4 228 188 A1**
(43) Date of publication of application: **16.08.2023**
(21) Application number: 20957975.4
(22) Date of filing: 19.10.2020
(51) Int. Cl.: H04L 5/00

(54) **WIRELESS COMMUNICATION METHOD AND APPARATUS**

(71) Applicant: Huawei Technologies Co., Ltd., Shenzhen, Guangdong 518129 (CN)
(72) Inventor: FAN, Bo, Shenzhen, Guangdong 518129 (CN); YUAN, Shitong, Shenzhen, Guangdong 518129 (CN); ZHANG, Xi, Shenzhen, Guangdong 518129 (CN)
(74) Representative: Huawei European IPR
(86) International application number: PCT/CN2020/121989
(87) International publication number: WO 2022/082386

(57) **Abstract**

This application provides a wireless communication method. The method includes: receiving first information, where the first information is for configuring a parameter of a first beam set, the first beam set includes at least one first beam, and the first beam is a beam shared by a plurality of channels and/or a plurality of reference signals; receiving second information, and determining information about a first beam subset based on the second information, where the first beam subset belongs to the first beam set; and receiving third information, and determining information about the first beam based on the third information, where the first beam belongs to the first beam subset, and the first beam is a common beam. In this application, beams of all channels/reference signals can be uniformly indicated by configuring, activating, and indicating a common beam. This simplifies implementation and reduces signaling overheads.

## Description

### TECHNICAL FIELD

This application relates to the communication field, and specifically, to a wireless communication method and apparatus.

### BACKGROUND

A 5th generation (5th generation, 5G) mobile communication system may use high-frequencies for communication, to be specific, use an ultra-high frequency band (above 6 GHz) signal for data transmission. A main problem of high-frequency communication is that signal energy sharply decreases as a transmission distance increases, resulting in a short signal transmission distance. To resolve this problem, an analog beam technology is used in high-frequency communication. Weighted processing is performed on an antenna array, to concentrate signal energy within a small angle range, to form a signal similar to a light beam (referred to as an analog beam, briefly referred to as a beam), so as to increase the transmission distance. Both a network device and a terminal device need to perform transmission by using a beam.

Uplink and downlink data transmission needs to be performed by using a specific beam. For example, in downlink transmission, the network device determines a type of a transmission beam, and the network device notifies the terminal device of a type of a reception beam that is of a target reference signal resource and that is used by the terminal device to receive a beam. Specifically, the network device sends, to the terminal device, downlink control information (Downlink control information, DCI) signaling including a transmission configuration index (Transmission configuration index, TCI) field. The TCI field indicates a configuration indication state (TCI-state). One TCI-state includes one target reference signal resource, indicating that a reception beam of the target reference signal resource is used as a reception beam. The reception beam of the target reference signal resource is known. Therefore, the terminal device may determine a reception beam for current transmission. The network device may configure a plurality of TCI-states for the terminal device, including different target reference signal resources. When the network device expects the terminal device to receive a signal by using a reception beam of a target reference signal resource, the network device may indicate a corresponding TCI-state to the terminal device, for example, configure, activate, and indicate the TCI-state.

In uplink transmission, the network device needs to notify the terminal device of a type of a transmission beam used by the terminal device. An uplink transmission beam is indicated by indicating a spatial relation (spatial relation) to the terminal device. The spatial relation includes a target reference signal resource, and a transmission beam for current uplink transmission is determined based on the target reference signal resource. The target reference signal resource may be an uplink reference signal resource, for example, a sounding reference signal (Sounding reference signal, SRS), or may be a downlink reference signal resource, for example, a synchronization signal and physical broadcast channel block (Synchronization Signal and PBCH Block, SSB) and a channel state information-reference signal (Channel state information-reference signal, CSI-RS). If the target reference signal resource is an SRS, it indicates that the terminal device performs sending by using a transmission beam of the SRS resource, where the transmission beam of the SRS is known. If the target reference signal resource is an SSB or a CSI-RS, it indicates that the terminal device performs sending by using a reception beam of the SSB/CSI-RS, where the reception beam of the SSB or the CSI-RS is known.

When the terminal device moves, quality of each beam changes, and consequently an optimal beam changes. When the optimal beam changes, the network device needs to update, via signaling, a beam used for uplink and downlink transmission, to ensure that a beam used by the terminal device is always optimal. How to efficiently notify a beam is a main problem to be resolved in this application.

### SUMMARY

This application provides a wireless communication method and apparatus, to uniformly indicate beams of all channels/reference signals, so that an implementation can be simplified and signaling overheads can be reduced.

According to a first aspect, a wireless communication method is provided. The method includes: receiving first information, where the first information is for configuring a parameter of a first beam set, the first beam set includes at least one first beam, and the first beam is a beam shared by a plurality of channels and/or a plurality of reference signals; receiving second information, and determining information about a first beam subset based on the second information, where the first beam subset belongs to the first beam set; and receiving third information, and determining information about the first beam based on the third information, where the first beam belongs to the first beam subset.

Based on the foregoing technical solution, beams of all channels/reference signals can be uniformly indicated by configuring the parameter of the first beam set, indicating the first beam subset, and indicating the first beam, so that an implementation can be simplified and signaling overheads can be reduced.

With reference to the first aspect, in some implementations of the first aspect, the parameter of the first beam set includes a mode of a first beam in the first beam set, and the mode of the first beam in the first beam set includes at least one of the following: a same first beam is used for uplink and downlink transmission, and separate first beams are used for uplink and downlink transmission.

With reference to the first aspect, in some implementations of the first aspect, the parameter of the first beam set further includes an identifier of the first beam in the first beam set.

With reference to the first aspect, in some implementations of the first aspect, the determining information about a first beam subset based on the second information includes: determining a type of the first beam in the first beam subset based on the second information, where the type includes at least one of the following: a first beam used for uplink and downlink transmission, a first beam used for uplink or downlink transmission, a first beam used for uplink transmission, and a first beam used for downlink transmission.

With reference to the first aspect, in some implementations of the first aspect, the second information is carried in first media access control MAC control element CE signaling.

With reference to the first aspect, in some implementations of the first aspect, the determining a type of the first beam in the first beam subset based on the second information includes: determining the type of the first beam in the first beam subset based on a logical channel identifier LCID corresponding to the first MAC CE signaling, where the type includes at least one of the following: the first beam used for uplink and downlink transmission, the first beam used for uplink or downlink transmission, the first beam used for uplink transmission, and the first beam used for downlink transmission.

With reference to the first aspect, in some implementations of the first aspect, the determining a type of the first beam in the first beam subset based on the second information includes: determining the type of the first beam in the first beam subset based on a first field in the first MAC CE signaling, where the type includes at least one of the following: the first beam used for uplink and downlink transmission, the first beam used for uplink or downlink transmission, the first beam used for uplink transmission, and the first beam used for downlink transmission.

With reference to the first aspect, in some implementations of the first aspect, the type of the first beam in the first beam subset is determined based on the mode of the first beam in the first beam set, where the type includes at least one of the following: the first beam used for uplink and downlink transmission, the first beam used for uplink or downlink transmission, the first beam used for uplink transmission, and the first beam used for downlink transmission.

With reference to the first aspect, in some implementations of the first aspect, fourth information is sent, where the fourth information includes a first parameter, and the first parameter in the fourth information indicates whether an uplink beam and a downlink beam are reciprocal of each other.

With reference to the first aspect, in some implementations of the first aspect, the type of the first beam in the first beam subset is determined based on the first parameter in the fourth information, where the type includes at least one of the following: the first beam used for uplink and downlink transmission, the first beam used for uplink or downlink transmission, the first beam used for uplink transmission, and the first beam used for downlink transmission.

With reference to the first aspect, in some implementations of the first aspect, the type of the first beam in the first beam subset is determined based on a second field in the first MAC CE signaling, where the type includes at least one of the following: the first beam used for uplink transmission and the first beam used for downlink transmission.

With reference to the first aspect, in some implementations of the first aspect, the first MAC CE signaling further includes an index of the first beam subset; or the first MAC CE signaling further includes a bitmap, and the bitmap indicates the first beam in the first beam subset.

With reference to the first aspect, in some implementations of the first aspect, the first MAC CE signaling includes one or two types of first beams; and it is determined, based on a third field in the first MAC CE signaling, that the first MAC CE signaling includes the one or two types of first beams.

With reference to the first aspect, in some implementations of the first aspect, when the first MAC CE signaling includes two types of first beams, the two types of first beams are: the first beam used for uplink transmission and the first beam used for downlink transmission.

With reference to the first aspect, in some implementations of the first aspect, the first beam used for uplink transmission is indicated based on a first bit in the first MAC CE signaling, and the first beam used for downlink transmission is indicated based on a second bit in the first MAC CE signaling; or the first beam used for downlink transmission is indicated based on a first bit in the first MAC CE signaling, and the first beam used for uplink transmission is indicated based on a second bit in the first MAC CE signaling.

With reference to the first aspect, in some implementations of the first aspect, that it is determined, based on a third field in the first MAC CE signaling, that the first MAC CE signaling includes the one or two types of first beams includes: determining, based on the third field in the first MAC CE signaling, whether the second bit in the first MAC CE signaling exists.

With reference to the first aspect, in some implementations of the first aspect, it is determined, based on a fourth field in the first MAC CE signaling, whether the first bit in the first MAC CE signaling indicates the first beam used for uplink transmission or the first beam used for downlink transmission.

With reference to the first aspect, in some implementations of the first aspect, the third information is carried in first downlink control information DCI, and the first DCI includes at least one of the following fields: a field for determining the type of the first beam, where the field includes a DCI format identifier field; or a field indicating a function of the first DCI, where the function of the first DCI includes at least one of the following: indicating the first beam, indicating scheduled data, and indicating the first beam and indicating scheduled data; or a field indicating the identifier of the first beam; or an activation or deactivation field indicating that the first DCI is used to activate the first beam or deactivate the first beam; or a carrier field indicating at least one of the following: a carrier corresponding to the first beam, a carrier group corresponding to the first beam, and a carrier group of the carrier corresponding to the first beam; or a frequency band field indicating a frequency band corresponding to the first beam; or a bandwidth part BWP field indicating a bandwidth part corresponding to the first beam; or a physical uplink control channel PUCCH resource indicator field indicating a PUCCH resource used to feed back ACK/NACK information of the first DCI; or a HARQ feedback time indicator field indicating a time interval between feeding back the ACK/NACK information of the first DCI and sending the first DCI.

With reference to the first aspect, in some implementations of the first aspect, before the first DCI is received, second DCI is received, where the second DCI indicates the first beam, and the second DCI is adjacent to the first DCI in terms of time.

With reference to the first aspect, in some implementations of the first aspect, when a first beam indicated by the first DCI is the same as the first beam indicated by the second DCI, and a value of the NDI field is toggled, the first DCI indicates deactivation of the first beam; or when a first beam indicated by the first DCI is different from the first beam indicated by the second DCI, the first DCI indicates activation of the first beam.

With reference to the first aspect, in some implementations of the first aspect, after the first DCI is used to activate the first beam, the first beam takes effect within first duration for which a first moment is used as a start moment, where the first moment includes any one of the following: a slot or a symbol for sending the first DCI, a slot or a symbol for sending a HARQ feedback message corresponding to the first DCI, and a sum of the slot or the symbol for sending the HARQ feedback message corresponding to the first DCI and K milliseconds, where K≥1.

With reference to the first aspect, in some implementations of the first aspect, the first duration is determined based on the first DCI; or the first duration is determined based on configuration information.

With reference to the first aspect, in some implementations of the first aspect, fifth information is sent when the first DCI includes scheduling information for data transmission, where the fifth information is acknowledgment ACK/negative acknowledgment NACK information of data; or sixth information is sent when the first DCI does not include the scheduling information for data transmission, where the sixth information is ACK/NACK information of the first DCI.

With reference to the first aspect, in some implementations of the first aspect, whether the first DCI includes the scheduling information for data transmission is determined based on a condition, where the condition includes at least one of the following: a value of the frequency domain resource allocation field in the first DCI is 0, and a value of the time domain resource allocation field in the first DCI is 0.

According to a second aspect, a wireless communication method is provided. The method includes: sending first information, where the first information is for configuring a parameter of a first beam set, the first beam set includes at least one first beam, and the first beam is a beam shared by a plurality of channels and/or a plurality of reference signals; sending second information, where the second information is for determining information about a first beam subset, and the first beam subset belongs to the first beam set; and sending third information, where the third information is for determining information about the first beam, and the first beam belongs to the first beam subset.

Based on the foregoing technical solution, beams of all channels/reference signals can be uniformly indicated by configuring the parameter of the first beam set, indicating the first beam subset, and indicating the first beam, so that an implementation can be simplified and signaling overheads can be reduced.

With reference to the second aspect, in some implementations of the second aspect, the parameter of the first beam set includes a mode of a first beam in the first beam set, and the mode of the first beam in the first beam set includes at least one of the following: a same first beam is used for uplink and downlink transmission, and separate first beams are used for uplink and downlink transmission.

With reference to the second aspect, in some implementations of the second aspect, the parameter of the first beam set further includes an identifier of the first beam in the first beam set.

With reference to the second aspect, in some implementations of the second aspect, the second information is for determining a type of the first beam in the first beam subset, and the type includes at least one of the following: a first beam used for uplink and downlink transmission, a first beam used for uplink or downlink transmission, a first beam used for uplink transmission, and a first beam used for downlink transmission.

With reference to the second aspect, in some implementations of the second aspect, the second information is carried in first media access control MAC control element CE signaling.

With reference to the second aspect, in some implementations of the second aspect, a logical channel identifier LCID corresponding to the first MAC CE signaling is for determining the type of the first beam in the first beam subset, and the type includes at least one of the following: the first beam used for uplink and downlink transmission, the first beam used for uplink or downlink transmission, the first beam used for uplink transmission, and the first beam used for downlink transmission.

With reference to the second aspect, in some implementations of the second aspect, a first field corresponding to the first MAC CE signaling is for determining the type of the first beam in the first beam subset, and the type includes at least one of the following: the first beam used for uplink and downlink transmission, the first beam used for uplink or downlink transmission, the first beam used for uplink transmission, and the first beam used for downlink transmission.

With reference to the second aspect, in some implementations of the second aspect, the mode of the first beam in the first beam set is for determining the type of the first beam in the first beam subset, and the type includes at least one of the following: the first beam used for uplink and downlink transmission, the first beam used for uplink or downlink transmission, the first beam used for uplink transmission, and the first beam used for downlink transmission.

With reference to the second aspect, in some implementations of the second aspect, fourth information is received, where the fourth information includes a first parameter, and the first parameter in the fourth information indicates whether an uplink beam and a downlink beam are reciprocal of each other.

With reference to the second aspect, in some implementations of the second aspect, the first parameter in the fourth information is for determining the type of the first beam in the group of first beams, and the type includes at least one of the following: the first beam used for uplink and downlink transmission, the first beam used for uplink or downlink transmission, the first beam used for uplink transmission, and the first beam used for downlink transmission.

With reference to the second aspect, in some implementations of the second aspect, a second field in the first MAC CE signaling is for determining the type of the first beam in the first beam subset, and the type includes at least one of the following: the first beam used for uplink transmission and the first beam used for downlink transmission.

With reference to the second aspect, in some implementations of the second aspect, the first MAC CE signaling further includes an index of the first beam subset; or the first MAC CE signaling further includes a bitmap, and the bitmap indicates the first beam in the first beam subset.

With reference to the second aspect, in some implementations of the second aspect, the first MAC CE signaling includes one or two types of first beams, and a third field in the first MAC CE signaling is for determining that the first MAC CE signaling includes the one or two types of first beams.

With reference to the second aspect, in some implementations of the second aspect, when the first MAC CE signaling includes two types of first beams, the two types of first beams are: the first beam used for uplink transmission and the first beam used for downlink transmission.

With reference to the second aspect, in some implementations of the second aspect, a first bit in the first MAC CE signaling indicates the first beam used for uplink transmission, and a second bit in the first MAC CE signaling indicates the first beam used for downlink transmission; or a first bit in the first MAC CE signaling indicates the first beam used for downlink transmission, and a second bit in the first MAC CE signaling indicates the first beam used for uplink transmission.

With reference to the second aspect, in some implementations of the second aspect, the third field in the first MAC CE signaling is for determining whether the second bit in the first MAC CE signaling exists.

With reference to the second aspect, in some implementations of the second aspect, a fourth field in the first MAC CE signaling is for determining whether the first bit in the first MAC CE signaling indicates the first beam used for uplink transmission or the first beam used for downlink transmission.

With reference to the second aspect, in some implementations of the second aspect, the third information is carried in first downlink control information DCI, and the first DCI includes at least one of the following fields: a field for determining the type of the first beam, where the field includes a DCI format identifier field; or a field indicating a function of the first DCI, where the function of the first DCI includes at least one of the following: indicating the first beam, indicating scheduled data, and indicating the first beam and indicating scheduled data; or a field indicating the identifier of the first beam; or an activation or deactivation field indicating that the first DCI is used to activate the first beam or deactivate the first beam; or a carrier field indicating at least one of the following: a carrier corresponding to the first beam, a carrier group corresponding to the first beam, and a carrier group of the carrier corresponding to the first beam; or a frequency band field indicating a frequency band corresponding to the first beam; or a bandwidth part BWP field indicating a bandwidth part corresponding to the first beam; or a physical uplink control channel PUCCH resource indicator field indicating a PUCCH resource used to feed back ACK/NACK information of the first DCI; or a HARQ feedback time indicator field indicating a time interval between feeding back the ACK/NACK information of the first DCI and sending the first DCI.

With reference to the second aspect, in some implementations of the second aspect, when a first field in the first DCI is reused to indicate activation or deactivation of the first beam, the first field in the first DCI includes at least one of the following: a frequency domain resource allocation field, a time domain resource allocation field, a modulation and coding scheme MCS field, a new data information NDI field, a redundancy version RV field, a hybrid automatic repeat request HARQ process field, a data allocation identifier DAI field, a physical uplink control channel PUCCH resource field, a HARQ feedback time indicator field, an antenna port, and a demodulation reference signal DMRS sequence initialization field.

With reference to the second aspect, in some implementations of the second aspect, before the first DCI is received, second DCI is sent, where the second DCI indicates the first beam, and the second DCI is adjacent to the first DCI in terms of time.

With reference to the second aspect, in some implementations of the second aspect, when a first beam indicated by the first DCI is the same as the first beam indicated by the second DCI, and a value of the NDI field is toggled, the first DCI indicates deactivation of the first beam; or when a first beam indicated by the first DCI is different from the first beam indicated by the second DCI, the first DCI indicates activation of the first beam.

With reference to the second aspect, in some implementations of the second aspect, after the first DCI is used to activate the first beam, the first beam takes effect within first duration for which a first moment is used as a start moment, where the first moment includes any one of the following: a slot or a symbol for sending the first DCI, a slot or a symbol for sending a HARQ feedback message corresponding to the first DCI, and a sum of the slot or the symbol for sending the HARQ feedback message corresponding to the first DCI and K milliseconds, where K≥1.

With reference to the second aspect, in some implementations of the second aspect, the first DCI includes information about the first duration, and the first duration is determined based on configuration information.

With reference to the second aspect, in some implementations of the second aspect, fifth information is received when the first DCI includes scheduling information for data transmission, where the fifth information is ACK/NACK information of data; or sixth information is received when the first DCI does not include the scheduling information for data transmission, where the sixth information is ACK/NACK information of the first DCI.

With reference to the second aspect, in some implementations of the second aspect, a condition is for determining whether the first DCI includes the scheduling information for data transmission, and the condition includes at least one of the following: a value of the frequency domain resource allocation field in the first DCI is 0, and a value of the time domain resource allocation field in the first DCI is 0.

According to a third aspect, a wireless communication method is provided. The method includes: receiving fifth information, where the fifth information is for configuring a parameter of a second beam set, the second beam set includes at least one second beam, and the second beam is a beam shared by a plurality of channels and/or a plurality of reference signals; and receiving sixth information, and determining information about the one or more second beams based on the sixth information.

Based on the foregoing technical solution, beams of all channels/reference signals can be uniformly indicated by configuring the parameter of the second beam set and indicating the second beam, so that an implementation can be simplified and signaling overheads can be reduced.

With reference to the third aspect, in some implementations of the third aspect, the parameter of the second beam set includes a mode of a second beam in the second beam set, and the mode of the second beam in the second beam set includes at least one of the following: a same second beam is used for uplink and downlink transmission, and independent second beams are used for uplink and downlink transmission.

With reference to the third aspect, in some implementations of the third aspect, the parameter of the second beam set further includes an identifier of the second beam in the second beam set.

With reference to the third aspect, in some implementations of the third aspect, a type of the one or more second beams is determined based on the sixth information, where the type of the one or more second beams includes at least one of the following:
a second beam used for uplink and downlink transmission, a second beam used for uplink or downlink transmission, a second beam used for uplink transmission, and a second beam used for downlink transmission.

With reference to the third aspect, in some implementations of the third aspect, the sixth information is carried in second MAC CE signaling.

With reference to the third aspect, in some implementations of the third aspect, the type of the one or more second beams is determined based on an LCID corresponding to the second MAC CE signaling, where the type of the one or more second beams includes at least one of the following: the second beam used for uplink and downlink transmission, the second beam used for uplink or downlink transmission, the second beam used for uplink transmission, and the second beam used for downlink transmission.

With reference to the third aspect, in some implementations of the third aspect, the type of the one or more second beams is determined based on a first field corresponding to the second MAC CE signaling, where the type of the one or more second beams includes at least one of the following: the second beam used for uplink and downlink transmission, the second beam used for uplink or downlink transmission, a first beam used for uplink transmission, and the second beam used for downlink transmission.

With reference to the third aspect, in some implementations of the third aspect, the type of the one or more second beams is determined based on the mode of the second beam, where the type of the one or more second beams includes at least one of the following: the second beam used for uplink and downlink transmission, the second beam used for uplink or downlink transmission, the second beam used for uplink transmission, and the second beam used for downlink transmission.

With reference to the third aspect, in some implementations of the third aspect, seventh information is sent, where the seventh information includes a first parameter, and the first parameter in the seventh information indicates whether an uplink beam and a downlink beam are reciprocal of each other.

With reference to the third aspect, in some implementations of the third aspect, the type of the one or more second beams is determined based on the first parameter in the seventh information, where the type of the one or more second beams includes at least one of the following: the second beam used for uplink and downlink transmission, the second beam used for uplink or downlink transmission, the second beam used for uplink transmission, and the second beam used for downlink transmission.

With reference to the third aspect, in some implementations of the third aspect, the type of the one or more second beams is determined based on a second field in the second MAC CE signaling, where the type of the one or more second beams includes at least one of the following: the second beam used for uplink transmission and the second beam used for downlink transmission.

With reference to the third aspect, in some implementations of the third aspect, the second MAC CE signaling further includes an index of the one or more second beams; or the second MAC CE signaling further includes a bitmap, and the bitmap indicates the one or more second beams.

With reference to the third aspect, in some implementations of the third aspect, the second MAC CE signaling includes the one or more second beams of one or two types; and it is determined, based on a third field in the second MAC CE signaling, that the second MAC CE signaling includes the one or more second beams of the one or two types.

With reference to the third aspect, in some implementations of the third aspect, when the second MAC CE signaling includes the one or more second beams of two types, the one or more second beams of the two types are respectively: the second beam used for uplink transmission and the second beam used for downlink transmission.

With reference to the third aspect, in some implementations of the third aspect, the second beam used for uplink transmission is indicated based on a first bit in the second MAC CE signaling, and the second beam used for downlink transmission is indicated based on a second bit in the second MAC CE signaling; or the second beam used for downlink transmission is indicated based on a first bit in the second MAC CE signaling, and the second beam used for uplink transmission is indicated based on a second bit in the second MAC CE signaling.

With reference to the third aspect, in some implementations of the third aspect, that it is determined, based on a third field in the second MAC CE signaling, that the second MAC CE signaling includes the one or more second beams of the one or two types includes: determining, based on the third field in the second MAC CE signaling, whether the second bit in the second MAC CE signaling exists.

With reference to the third aspect, in some implementations of the third aspect, it is determined, based on a fourth field in the second MAC CE signaling, whether the first bit in the second MAC CE signaling indicates the second beam used for uplink transmission or the second beam used for downlink transmission.

According to a fourth aspect, a wireless communication method is provided. The method includes: sending fifth information, where the fifth information is for configuring a parameter of a second beam set, the second beam set includes at least one second beam, and the second beam is a beam shared by a plurality of channels and/or a plurality of reference signals; and sending sixth information, where the sixth information is for determining information about the one or more second beams.

Based on the foregoing technical solution, beams of all channels/reference signals can be uniformly indicated by configuring the parameter of the second beam set and indicating the second beam, so that an implementation can be simplified and signaling overheads can be reduced.

With reference to the fourth aspect, in some implementations of the fourth aspect, the parameter of the second beam set includes a mode of a second beam in the second beam set, and the mode of the second beam in the second beam set includes at least one of the following: a same second beam is used for uplink and downlink transmission, and independent second beams are used for uplink and downlink transmission.

With reference to the fourth aspect, in some implementations of the fourth aspect, the parameter of the second beam set further includes an identifier of the second beam in the second beam set.

With reference to the fourth aspect, in some implementations of the fourth aspect, the sixth information is for determining a type of the one or more second beams, and the type of the one or more second beams includes at least one of the following: a second beam used for uplink and downlink transmission, a second beam used for uplink or downlink transmission, a second beam used for uplink transmission, and a second beam used for downlink transmission.

With reference to the fourth aspect, in some implementations of the fourth aspect, the sixth information is carried in second MAC CE signaling.

With reference to the fourth aspect, in some implementations of the fourth aspect, an LCID corresponding to the second MAC CE signaling is for determining the type of the one or more second beams, and the type of the one or more second beams includes at least one of the following: the second beam used for uplink and downlink transmission, a first beam used for uplink or downlink transmission, the second beam used for uplink transmission, and the second beam used for downlink transmission.

With reference to the fourth aspect, in some implementations of the fourth aspect, a first field corresponding to the second MAC CE is for determining the type of the one or more second beams, and the type of the one or more second beams includes at least one of the following: the second beam used for uplink and downlink transmission, the second beam used for uplink or downlink transmission, a first beam used for uplink transmission, and the second beam used for downlink transmission.

With reference to the fourth aspect, in some implementations of the fourth aspect, the mode of the second beam is for determining the type of the one or more second beams, and the type of the one or more second beams includes at least one of the following: the second beam used for uplink and downlink transmission, the second beam used for uplink or downlink transmission, the second beam used for uplink transmission, and the second beam used for downlink transmission.

With reference to the fourth aspect, in some implementations of the fourth aspect, seventh information is received, where the seventh information includes a first parameter, and the first parameter in the seventh information indicates whether an uplink beam and a downlink beam are reciprocal of each other.

With reference to the fourth aspect, in some implementations of the fourth aspect, the first parameter in the seventh information is for determining the type of the one or more second beams, and the type of the one or more second beams includes at least one of the following: the second beam used for uplink and downlink transmission, the second beam used for uplink or downlink transmission, the second beam used for uplink transmission, and the second beam used for downlink transmission.

With reference to the fourth aspect, in some implementations of the fourth aspect, a second field in the second MAC CE signaling is for determining the type of the one or more second beams, and the type of the one or more second beams includes at least one of the following: the second beam used for uplink transmission and the second beam used for downlink transmission.

With reference to the fourth aspect, in some implementations of the fourth aspect, the second MAC CE signaling further includes an index of the one or more second beams; or the second MAC CE signaling further includes a bitmap, and the bitmap indicates the one or more second beams.

With reference to the fourth aspect, in some implementations of the fourth aspect, the second MAC CE signaling includes the one or more second beams of one or two types, and a third field in the second MAC CE signaling is for determining that the second MAC CE signaling includes the one or more second beams of the one or two types.

With reference to the fourth aspect, in some implementations of the fourth aspect, when the second MAC CE signaling includes the one or more second beams of two types, the one or more second beams of the two types are respectively: the second beam used for uplink transmission and the second beam used for downlink transmission.

With reference to the fourth aspect, in some implementations of the fourth aspect, a first bit in the second MAC CE signaling indicates the second beam used for uplink transmission, and a second bit in the second MAC CE signaling indicates the second beam used for downlink transmission; or a first bit in the second MAC CE signaling indicates the second beam used for downlink transmission, and a second bit in the second MAC CE signaling indicates the second beam used for uplink transmission.

With reference to the fourth aspect, in some implementations of the fourth aspect, the third field in the second MAC CE signaling is for determining whether the second bit in the second MAC CE signaling exists.

With reference to the fourth aspect, in some implementations of the fourth aspect, a fourth field in the second MAC CE signaling is for determining whether the first bit in the second MAC CE signaling indicates the second beam used for uplink transmission or the second beam used for downlink transmission.

According to a fifth aspect, a communication apparatus is provided. The communication apparatus is configured to perform the communication method according to the first aspect to the fourth aspect. Specifically, the communication apparatus may include a module configured to perform the communication method according to the first aspect to the fourth aspect.

According to a sixth aspect, a communication apparatus is provided. The communication apparatus includes a processor. The processor is coupled to a memory, and may be configured to execute instructions in the memory, to implement the communication method in any one of the first aspect to the fourth aspect and the possible implementations of the first aspect to the fourth aspect. Optionally, the communication apparatus further includes the memory. Optionally, the communication apparatus further includes a communication interface, the processor is coupled to the communication interface, and the communication interface is configured to: input and/or output information. The information includes at least one of instructions and data.

In an implementation, the communication apparatus is a terminal device. When the communication apparatus is the terminal device, the communication interface may be a transceiver or an input/output interface.

In another implementation, the communication apparatus is a chip or a chip system. When the communication apparatus is the chip or the chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system disposed in a terminal device.

Optionally, the transceiver may be a transceiver circuit. Optionally, the input/output interface may be an input/output circuit.

According to a seventh aspect, a communication apparatus is provided, and includes a processor. The processor is coupled to a memory, and may be configured to execute instructions in the memory, to implement the communication method according to any one of the second aspect or the possible implementations of the second aspect. Optionally, the communication apparatus further includes the memory. Optionally, the communication apparatus further includes a communication interface, the processor is coupled to the communication interface, and the communication interface is configured to: input and/or output information. The information includes at least one of instructions and data.

In an implementation, the communication apparatus is a network device. When the communication apparatus is the network device, the communication interface may be a transceiver or an input/output interface.

In another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system disposed in a network device.

Optionally, the transceiver may be a transceiver circuit. Optionally, the input/output interface may be an input/output circuit.

According to an eighth aspect, a computer-readable storage medium is provided. The computer-readable storage medium stores a computer program, and when the computer program is executed by a communication apparatus, the communication apparatus is enabled to implement the communication method according to any one of the first aspect to the fourth aspect and the possible implementations of the first aspect to the fourth aspect.

According to a ninth aspect, a computer-readable storage medium is provided. The computer-readable storage medium stores a computer program, and when the computer program is executed by a communication apparatus, the communication apparatus is enabled to implement the communication method according to any one of the first aspect to the fourth aspect and the possible implementations of the first aspect to the fourth aspect.

According to a tenth aspect, a computer program product including instructions is provided. When the instructions are executed by a computer, a communication apparatus is enabled to implement the communication method according to the first aspect to the fourth aspect.

According to an eleventh aspect, a computer program product including instructions is provided. When the instructions are executed by a computer, a communication apparatus is enabled to implement the communication method according to the first aspect to the fourth aspect.

According to a twelfth aspect, a communication system is provided, and includes the foregoing network device and the foregoing terminal device.

### BRIEF DESCRIPTION OF DRAWINGS

FIG. 1 is a schematic diagram of a wireless communication system 100 according to an embodiment of this application;
FIG. 2 is a schematic diagram of a wireless communication system 200 according to an embodiment of this application;
FIG. 3 is a schematic diagram of a MAC CE structure 300 used to activate a TCI according to an embodiment of this application;
FIG. 4 is an example diagram of a beam indication method 400 according to an embodiment of this application;
FIG. 5 is a schematic flowchart of a wireless communication method 500 according to an embodiment of this application;
FIG. 6 is a schematic diagram of a location 600 of a first field in first MAC CE signaling according to an embodiment of this application;
FIG. 7 is a schematic diagram of a location 700 of a second field in first MAC CE signaling according to an embodiment of this application;
FIG. 8 is a schematic diagram of a location 800 of a third field in first MAC CE signaling according to an embodiment of this application;
FIG. 9 is a schematic flowchart of a wireless communication method 900 according to an embodiment of this application;
FIG. 10 is a schematic diagram of a location 900 of a second field in second MAC CE signaling according to an embodiment of this application;
FIG. 11 is a schematic diagram of a location 1000 of a third field in second MAC CE signaling according to an embodiment of this application;
FIG. 12 is a schematic flowchart of a wireless communication method 1200 according to an embodiment of this application;
FIG. 13 is a schematic flowchart of a wireless communication method 1300 according to an embodiment of this application;
FIG. 14 is a schematic block diagram of a communication apparatus 1400 according to an embodiment of this application;
FIG. 15 is a schematic block diagram of another communication apparatus 1500 according to an embodiment of this application;
FIG. 16 is a schematic block diagram of another communication apparatus 1600 according to an embodiment of this application; and
FIG. 17 is a schematic block diagram of another communication apparatus 1700 according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, and a universal mobile communications system (universal mobile telecommunications system, UMTS).

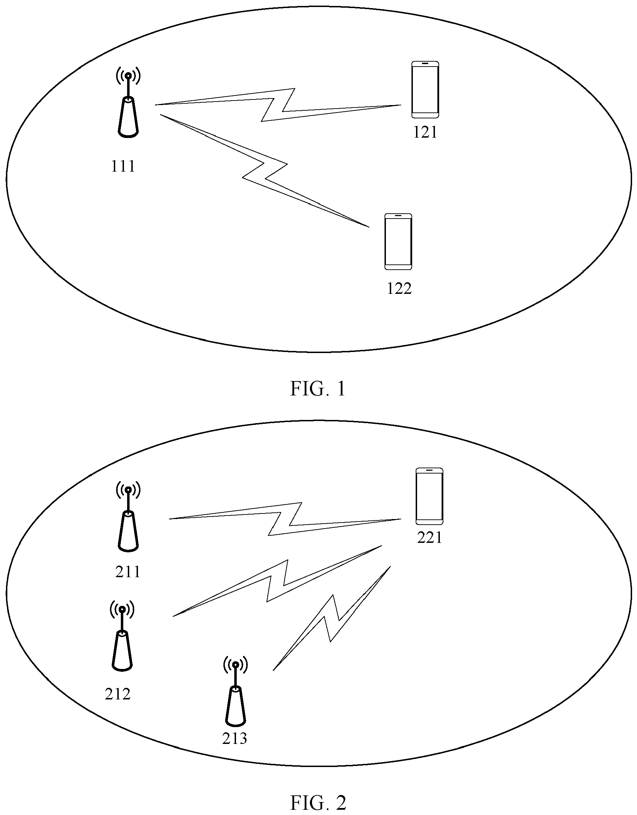

For ease of understanding embodiments of this application, a communication system to which an embodiment of this application is applicable is first described in detail with reference to FIG. 1 and FIG. 2.

FIG. 1 is a schematic diagram of a wireless communication system 100 according to an embodiment of this application. As shown in FIG. 1, the wireless communication system 100 may include at least one network device, for example, a network device 111 shown in FIG. 1. The wireless communication system 100 may further include at least one terminal device, for example, a terminal device 121 and a terminal device 122 shown in FIG. 1. A plurality of antennas may be configured for each of the network device and the terminal device. The network device and the terminal device may communicate with each other by using a multi-antenna technology.

FIG. 2 is a schematic diagram of a wireless communication system 200 according to an embodiment of this application. As shown in FIG. 2, the wireless communication system 200 may include at least one network device, for example, network devices 211, 212, and 213 shown in FIG. 2. The wireless communication system 200 may further include at least one terminal device, for example, a terminal device 221 shown in FIG. 2. A plurality of antennas may be configured for each of the network device and the terminal device. The network device and the terminal device may communicate with each other by using a multi-antenna technology.

It can be further understood that the network device in the wireless communication system may be any device that has a wireless transceiver function. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (Baseband Unit, BBU), an access point (Access Point, AP) in a wireless fidelity (Wireless Fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system such as an NR system or one or one group of antenna panels (including a plurality of antenna panels) of a base station in a 5G system, or may be a network node that constitutes a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU for short). The CU performs some functions of the gNB, and the DU performs some functions of the gNB. For example, the CU is responsible for processing a non-real-time protocol and a service, to implement functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be a network device in an access network (radio access network, RAN), or may be a network device in a core network (core network, CN). This is not limited in this application.

It can be further understood that the terminal device in the wireless communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

For ease of understanding embodiments of this application, the following first briefly describes several terms in this application.

### 1. Beam

The beam in the NR protocol may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi co-location (Quasi co-location, QCL) information, a QCL assumption, a QCL indication, or the like. The beam may be indicated by transmitting a TCI-state parameter, or may be indicated by a spatial relation parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indication, a TCI-state (including an uplink TCI-state and a downlink TCI-state), a spatial relation, or the like. The foregoing terms are also equivalent to each other. Alternatively, the beam may be replaced with another term indicating a beam. This is not limited in this application.

A beam used to transmit a signal may be referred to as a transmission beam (Transmission beam, Tx beam), or may be referred to as a spatial domain transmission filter (Spatial domain transmission filter), a spatial transmission filter (Spatial transmission filter), a spatial domain transmission parameter (Spatial domain transmission parameter), a spatial transmission parameter (Spatial transmission parameter), a spatial domain transmission setting (Spatial domain transmission setting), or a spatial transmission setting (Spatial transmission setting). A downlink transmission beam may be indicated by a TCI-state.

A beam used to receive a signal may be referred to as a reception beam (Reception beam, Rx beam), or may be referred to as a spatial domain reception filter (Spatial domain reception filter), a spatial reception filter (Spatial reception filter), a spatial domain reception parameter (Spatial domain reception parameter), a spatial reception parameter (Spatial reception parameter), a spatial domain reception setting (Spatial domain reception setting), or a spatial reception setting (Spatial reception setting). An uplink transmission beam may be indicated by a spatial relation, an uplink TCI-state, or an SRS resource (indicating that a transmission beam of the SRS is used). Therefore, the uplink beam may also be replaced with the SRS resource.

A transmission beam may refer to distribution of signal strength formed in different directions in space after a signal is transmitted through an antenna, and a reception beam may refer to distribution of signal strength that is of a radio signal received from an antenna and that is in different directions in space.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and the network device knows quality of the corresponding beams. During data transmission, beam information is also indicated by a resource corresponding to the beam information. For example, the network device indicates information about a physical downlink shared channel (Physical downlink shared channel, PDSCH) beam to the terminal device via a TCI field in DCI.

In a possible implementation, a plurality of beams having a same or similar communication feature are considered as one beam. One beam may include one or more antenna ports, configured to transmit a data channel, a control channel, a sounding signal, and the like. The one or more antenna ports forming the beam may also be considered as one antenna port set.

In this application, unless otherwise specified, the beam is a beam sent by the network device. During beam measurement, each beam sent by the network device corresponds to one resource. Therefore, the beam corresponding to the resource may be determined based on an index of the resource.

### 2. TCI-state (indicating a downlink beam)

A network device may generate different beams that point to different transmission directions. During downlink data transmission, when the network device sends data to a terminal device by using a specific beam, the network device needs to notify the terminal device of information about a transmission beam used by the network device. In this way, the terminal device can receive, by using a reception beam corresponding to the transmission beam, the data sent by the network device. In the 3GPP R15/R16 protocol, the network device indicates, to the terminal device via a TCI field in DCI, related information of a transmission beam used by the network device. Specifically, a size of the TCI field is three bits, which may specifically represent eight different field values (codepoint). Each value of the TCI field corresponds to an index of a TCI-state, and the index of the TCI-state may uniquely identify a TCI-state. One TCI-state includes several parameters, and related information of a transmission beam may be determined by using these parameters. The TCI-state is configured by the network device for each terminal device. A structure of the TCI-state is as follows:

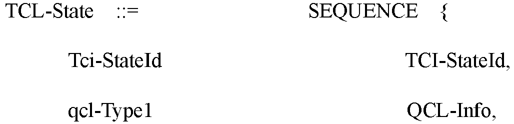

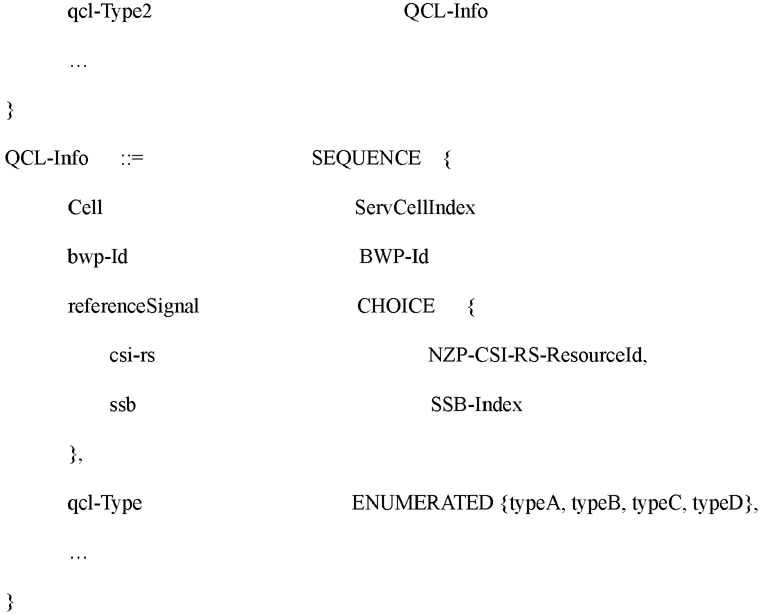

Each TCI-state includes an index of the TCI-state, that is, tci-StateId, and two pieces of QCL-Info. Each piece of QCL-Info includes one cell (cell) field and a bwp-Id, respectively indicating a bandwidth part (Bandwidth part, BWP) that is of a cell and to which the TCI-state is applied. In other words, different QCL-Info may be configured for different BWPs of different cells or a same cell. The QCL-Info further includes a reference signal (reference Signal), indicating a reference signal resource with which a quasi co-location (quasi co-location, QCL) relationship is formed. In the R15/R16 protocol, the beam is usually replaced with another term. For example, during data transmission and channel measurement, a beam corresponds to a reference signal resource, and one beam corresponds to one reference signal resource. Therefore, herein, indicating a reference signal resource with which a QCL relationship is formed essentially indicates a beam with which a QCL relationship is formed. The QCL relationship means that two reference signal resources (or two antenna ports, where the antenna ports and the reference signal resources are also in a one-to-one correspondence) have some same spatial parameters. Specifically, which spatial parameters are the same depends on a type of the QCL-Info, that is, another field qcl-Type of the QCL-Info. qcl-Type may be set to four values {typeA, typeB, typeC, typeD}. typeD is used as an example. typeD indicates that the two reference signal resources have same spatial reception parameter information. That is, two beams have a same reception beam. A maximum of one of two pieces of QCL-Info included in the TCI-state can be typeD.

The following uses an example to describe in detail how the network device indicates reception beam information of a data transmission beam to the terminal device by using the TCI-state according to the R15/R16 protocol. This includes TCI-state configuration, activation, and indication.

TCI-state configuration: The network device configures a plurality of TCI-states for the terminal device via RRC (Radio resource control, radio resource control) signaling. Each of these TCI-states includes a piece of QCL-Info of typeD. Alternatively, the network device may configure a TCI-state that does not include QCL-info of typeD. However, the TCI-states do not indicate the data transmission beam. Therefore, details are not further described herein.

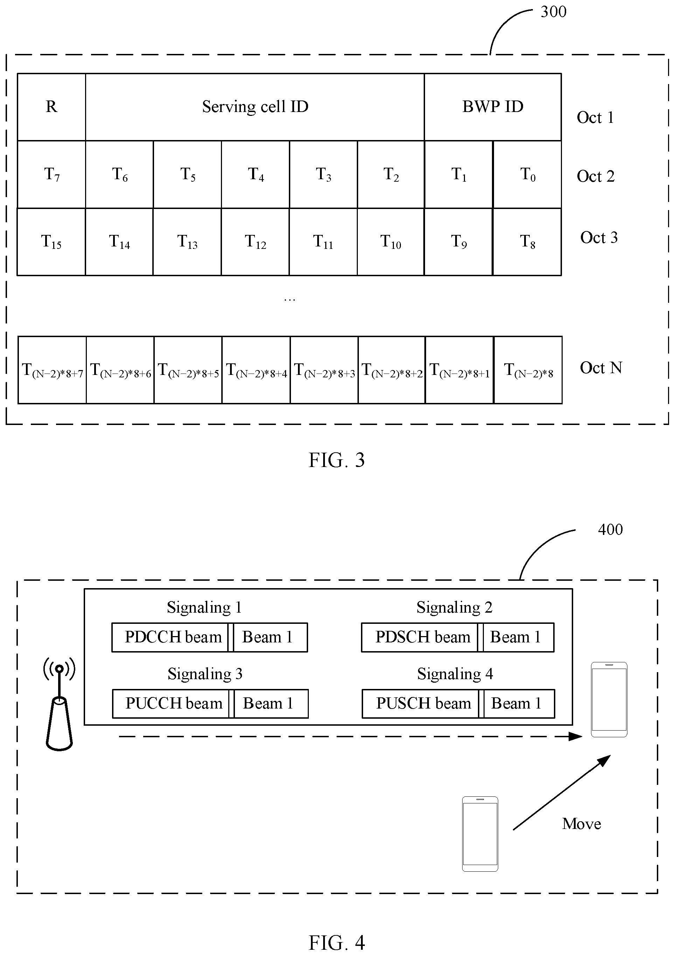

TCI-state activation: After configuring a plurality of TCI-states, the network device further needs to activate eight of the TCI-states by using a MAC CE (Medium access control Control element, media access control control element). The eight TCI states are in a one-to-one correspondence with eight values of the TCI field in the DCI. In other words, the eight TCI-states corresponding to the eight values of the TCI field in the DCI are determined based on media access control MAC control element CE signaling. FIG. 3 is a schematic diagram of a structure of a MAC CE used to activate a TCI according to an embodiment of this application. As shown in FIG. 3, fields T₀ to T_{(N-2)*8+07} respectively correspond to TCI-states whose indexes are respectively 0 to (N-2)*8+7 that are configured in the first step. A size of each field is 1 bit, and a value may be 0 or 1. The value 1 indicates that the TCI-state is activated, and the value 0 indicates that the TCI-state is not activated. Theoretically, each MAC CE may have eight activation fields whose values are 1, and the others are all 0. TCI-states corresponding to the eight fields whose values are 1 are the eight TCI-states corresponding to the eight values of the TCI field in the DCI. For example, a smallest value 000 of the TCI field corresponds to an activated TCI-state with a smallest index in the MAC CE. The rest may be deduced by analogy. There are many types of MAC CEs. In addition to a MAC CE used for TCI-state activation, there are many MAC CEs used for other purposes. This application relates only to a MAC-CE used to activate a TCI-state/TCI-state combination. Therefore, unless otherwise specified, the MAC CE in this application is such a MAC CE.

TCI-state indication: The network device indicates a specific TCI-state by using the TCI field in the DCI. For example, a value of the TCI field in the DCI sent by the network device to the terminal device is 000, indicating that a TCI-state corresponding to 000 is for data transmission beam. A reference signal included in the QCL-Info of typeD in the TCI-state is a channel state information-reference signal (Channel state information-reference signal, CSI-RS) whose index is #1, indicating that a beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a reception beam corresponding to the data transmission beam, to receive data by using a corresponding reception beam.

### 3. Spatial relation (indicating an uplink beam)

In a current protocol, a transmission beam for uplink transmission is indicated by the spatial relation, and a function of the spatial relation is similar to that of a TCI-state, to notify a terminal device of a transmission beam for uplink transmission.

The spatial relation also needs to be first configured through RRC signaling. A configuration structure of the spatial relation is as follows:

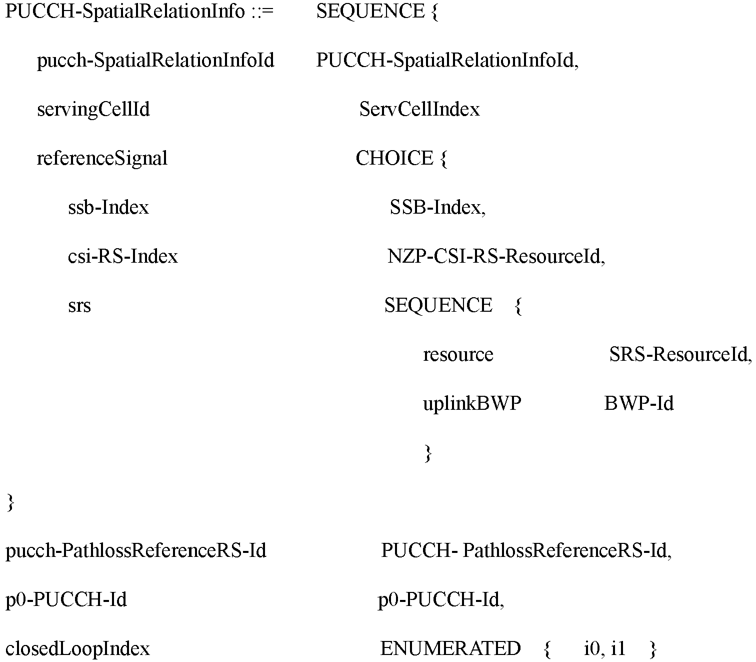

The spatial relation includes an ID of the spatial relation, a cell ID, a target reference signal resource, a path loss measurement reference signal, a power control parameter, and the like. The target reference signal resource (which may be one of an SRS/an SSB/a CSI-RS) indicates a corresponding uplink beam. If a spatial relation #1 is used for uplink transmission, and the spatial relation #1 includes a target reference signal resource #2, it indicates that a transmission beam used for uplink transmission is a transmission/reception beam of the target reference signal. For example, when the target reference signal resource is an uplink resource SRS, it indicates that the transmission beam used for uplink transmission is a transmission beam of the SRS (the transmission beam of the SRS is known). For another example, if the target reference signal resource is a downlink resource such as an SSB/a CSI-RS, it indicates that the transmission beam used for uplink transmission is a reception beam of the SSB/CSI-RS (the reception beam of the SSB/CSI-RS is known).

A network device may configure a plurality of spatial relations for the terminal device, and then activate one of the spatial relations for corresponding data transmission by using a MAC CE. Uplink transmission includes a physical uplink control channel (physical uplink control channel, PUCCH), a sounding reference signal (sounding reference signal, SRS), a physical uplink shared channel (physical uplink shared channel, PUSCH), and the like, and a corresponding spatial relation is required. A spatial relation of the PUCCH is indicated by MAC CE signaling. A spatial relation of the SRS is also indicated by MAC CE signaling. During PUSCH transmission, a specific SRS is associated, and a spatial relation of the SRS is used for transmission.

### 4. Panel

The panel is an antenna panel, and may be an antenna panel of a network device, or may be an antenna panel of a terminal device. There are usually one or more antennas on one antenna panel. These antennas are arranged into an antenna array, and beamforming is performed, to form an analog beam. The antenna array may generate analog beams pointing to different directions. That is, a plurality of analog beams may be formed on each antenna panel, and a best analog beam used by the antenna panel may be determined through beam measurement. The terminal device may be provided with a plurality of antenna panels. These antenna panels may be distributed at different locations and face different directions. This can ensure that at least one antenna panel faces the network device regardless of a direction of the terminal device, and can perform data transmission with the network device. The terminal device may simultaneously enable all antenna panels for transmission. Alternatively, to reduce power consumption of the terminal device, the terminal device may perform transmission by using only one antenna panel once, and another unused antenna panel may be closed. Whether the antenna panel of the terminal device is in an open state or a closed state usually needs to be notified to the network device. In other words, the terminal device and the network device usually need to exchange status information of the antenna panels.

In embodiments of this application, unless otherwise specified, each antenna panel is the antenna panel of the terminal device. The antenna panel may also be represented by a panel index or the like. In addition, the antenna panel may also be implicitly represented in another manner. For example, the antenna panel may also be represented by an antenna port (for example, a CSI-RS port, an SRS port, a demodulation reference signal (demodulation reference signal, DMRS) port, a phase tracking reference signal (phase tracking reference signal, PTRS) port, a CRS port, a time-frequency tracking reference signal (tracking reference signal, TRS) port, or an SSB port) or an antenna port group, or may be represented by a resource (for example, a CSI-RS resource, an SRS resource, a DMRS resource, a PTRS resource, a cell reference signal (cell reference signal, CRS) resource, a time-frequency tracking reference signal (tracking reference signal, TRS) resource, or a synchronization signal and physical broadcast channel block (Synchronization signal and PBCH Block, SSB) resource) or a resource group, or may be represented by a channel (for example, a PUCCH, a PUSCH, a physical random access channel (Physical random access channel, PRACH), a physical downlink control channel (Physical downlink shared channel, PDSCH), a physical downlink control channel (Physical downlink control channel, PDCCH), or a physical broadcast channel (Physical broadcast channel, PBCH)), or may be represented by a beam, QCL, a TCI-state, a spatial relation, or an index configured in QCL, a TCI-state, or a spatial relation, or may be represented by a beam group, a QCL group, a TCI-state group, a spatial relation group, or the like. In other words, the antenna panel/panel identifier in this application may be replaced with an identifier of the foregoing content.

In embodiments of this application, the network device is an apparatus deployed in a radio access network to provide a wireless communication function for the terminal device. The network device may include macro base stations, micro base stations (also referred to as small cells), relay stations, and access points in various forms. In systems using different radio access technologies, names of network devices may be different, for example, a BTS (Base Transceiver Station, base transceiver station) in a GSM (Global System for Mobile Communications, global system for mobile communications) or a CDMA (Code Division Multiple Access, code division multiple access) network, an NB (NodeB) in WCDMA (Wideband Code Division Multiple Access, wideband code division multiple access), and an eNB or eNodeB (Evolved NodeB) in LTE (Long Term Evolution, long term evolution). The network device may alternatively be a radio controller in a CRAN (Cloud Radio Access Network, cloud radio access network) scenario. Alternatively, the network device may be a base station device in a future 5G network or a network device in a future evolved PLMN. Alternatively, the network device may be a wearable device or a vehicle-mounted device. Alternatively, the network device may be a transmission and reception point (Transmission and reception point, TRP).

The terminal device in embodiments of this application may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), a cellular phone (cellular phone), a smartphone (smartphone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) terminal, or the like.

### 5. Common beam

In the conventional technology, each channel is indicated by a separate beam. For example, beams of a PDCCH and a PDSCH are indicated by a TCI-state, and beams of a PUCCH and a PUSCH are indicated by a spatial relation. Each channel has a beam corresponding to the channel. In this application, a common beam is defined, and is used for a plurality of uplink and downlink channels.

Common beam: is a same beam shared by a plurality of/a plurality of types of channels and/or a plurality of/a plurality of types of reference signals. The plurality of/the plurality of types of channels/reference signals include but are not limited to one or more of the following channels/signals: a PDCCH, a PDSCH, a PUCCH, a PUSCH, a PRACH, a random access message 2, a random access message 3, a random access message 4, an SSB, a CSI-RS, a DMRS, a phase tracking reference signal (Phase Tracking Reference Signal, PTRS), a TRS, an SRS, and the like.

Common beams can be classified into the following categories. Unless otherwise specified, a common beam mentioned subsequently may be any one of the common beams.

Uplink and downlink common beam: used for transmission of one or more uplink and downlink channels, such as a PDCCH, a PDSCH, a PUCCH, and a PUSCH.

Uplink common beam: used for transmission of a plurality of/a plurality of types of uplink channels, such as a PUCCH and a PUSCH.

Downlink common beam: used for transmission of a plurality of/a plurality of types of downlink channels, such as a PDCCH and a PDSCH.

Control channel common beam: used for transmission of a plurality of/a plurality of types of control channels, where the control channels include a PDCCH, a PUCCH, and the like.

Data channel common beam: used for transmission of a plurality of/a plurality of types of data channels, where the data channels include a PDSCH, a PUSCH, and the like.

Wide common beam: Common beams are classified into two types based on a beam coverage angle. A beam with a large coverage angle is referred to as a wide common beam.

Narrow common beam: Common beams are classified into two types based on a beam coverage angle. A beam with a small coverage angle is referred to as a narrow common beam.

The common beam in this application may be any one of the foregoing beams, or may be another type of common beam.

### Quantity of common beams

The network device may configure/activate/indicate a common beam for the terminal device, where the common beam is an uplink and downlink common beam. The network device may configure/activate/indicate a plurality of common beams for the terminal device, where the plurality of common beams are common beams of different types, for example, an uplink common beam and a downlink common beam, or a control channel common beam and a data channel common beam, or the plurality of common beams may be common beams of a same type, that is, a plurality of common beams of a same type may be configured/activated/indicated for the terminal device.

### Form of the common beam

The common beam may be a newly defined structure (different from existing structures of a TCI-state and a spatial relation). For example, the common beam includes related information of an uplink and downlink beam indication, including but not limited to one or more of the following: a common beam ID, a logical cell ID (cell ID), a physical cell ID, a reference signal resource for determining an uplink and downlink beam by using a frequency component ID (bandwidth part, BWP), a quasi co-location (Quasi co-location, QCL) type, and an uplink power control related parameter (for example, a path loss measurement reference signal resource, p0, and closedLoopIndex).

### Application scope of the common beam

The common beam may be at a cell level, that is, one common beam is used for transmission of a plurality of channels in one cell. The common beam may be at a BWP level, and is used for transmission of a plurality of beams in one BWP. The common beam may also be cross-cell, and is used for transmission of a plurality of channels in a plurality of cells. The plurality of cells may be a plurality of cells in one band (band). The plurality of cells may also be a plurality of inter-band cells. The common beam may be at a CORESET level, that is, a same common beam is used for all PDCCHs corresponding to a CORESET, and/or all PDSCHs scheduled by a PDCCH of the CORESET, and/or all PUSCHs scheduled by the PDCCH of the CORESET, and/or PUCCHs/PUSCHs for transmitting ACK/NACK of the PDSCHs scheduled by the PDCCH of the CORESET.

The common beam is also indicated by a TCI-state or a spatial relation. For example, the downlink common beam is indicated by a TCI-state, and the uplink common beam is indicated by a spatial relation.

In other words, a representation form of the common beam in this application in the protocol may be a TCI-state, a spatial relation, or another parameter used to indicate an uplink/downlink transmission beam.

Compared with the common beams, beams defined in the protocols R15 and R16, such as a TCI-state, a spatial relation, and a spatial filter, are referred to as normal beams. The normal beam is used for transmission of a single channel, and cannot be used for transmission of a plurality of channels or a plurality of reference signals. The network device needs to separately indicate a normal beam for each channel for transmission.

FIG. 4 is an example diagram of a beam indication method according to an embodiment of this application. As shown in FIG. 4, a network device separately indicates beams for a PDCCH, a PDSCH, a PUCCH, and a PUSCH via different signaling. Because different signaling is used for each type of channel, high signaling overheads are caused. However, beams corresponding to a plurality of different channels are usually the same, and there is no need to separately indicate the beams, thereby wasting signaling overheads.

In view of this, this application provides a solution, to avoid complex redundant configuration/indication signaling by efficiently indicating uplink and downlink beams.

It can be understood that a first beam, a second beam, a third beam, and a fourth beam in this embodiment of this application are all common beams.

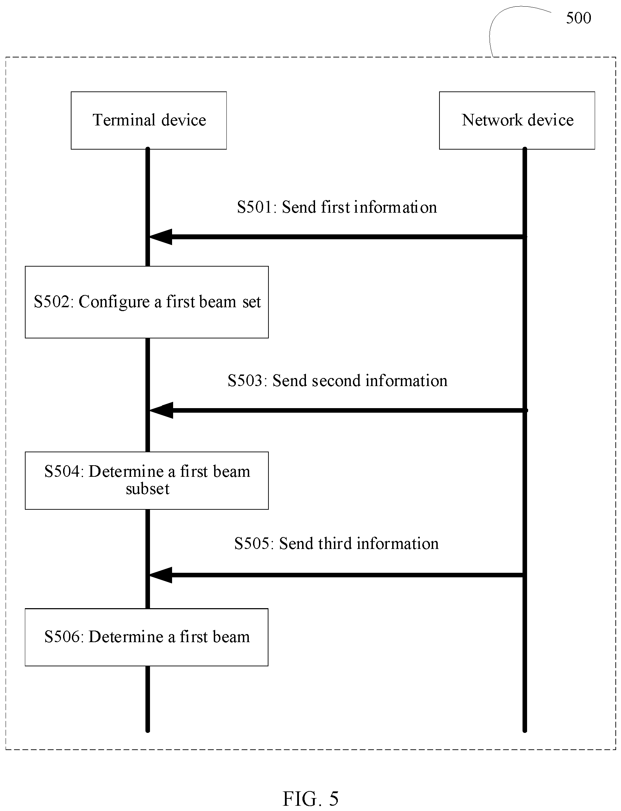

FIG. 5 is a schematic flowchart of a wireless communication method according to an embodiment of this application. The method 500 may include the following steps. A first beam is a common beam.

In this embodiment of this application, four types of common beams, that is, a first beam used for uplink and downlink transmission, a first beam used for uplink or downlink transmission, a first beam used for uplink transmission, and a first beam used for downlink transmission, are used as an example for description. However, another type of common beam is not excluded. This embodiment of this application is also applicable to distinguishing between other types of common beams. In addition to distinguishing between common beams, this embodiment of this application may also be used to distinguish between activation signaling of normal beams, provided that the common beam is replaced with the normal beam.

It can be understood that, in this embodiment of this application, the first beam used for uplink and downlink transmission is equivalent to an uplink and downlink common beam, the first beam used for uplink or downlink transmission is equivalent to an uplink and downlink independent common beam, the first beam used for uplink transmission is equivalent to an uplink common beam, and the first beam used for downlink transmission is equivalent to a downlink common beam.

S501: Send first information.

For example, a network device sends first information to a terminal device, where the first information is for configuring a parameter of a first beam set, the first beam set includes at least one first beam, and the first beam is a beam shared by at least one channel and/or at least one reference signal, that is, the first beam is a common beam. The network device may configure, via RRC signaling, some parameters related to the first beam, for example, a quantity and a type of the first beam.

In a possible implementation, the network device may configure a mode of the first beam in the first beam set by using the first information. For example, at least two common modes may be configured: A same first beam is used for uplink and downlink transmission, and separate first beams are used for uplink and downlink transmission. That a same first beam is used for uplink and downlink transmission means that the same first beam is used for uplink transmission and downlink transmission. For example, a same first beam may be used for one or more uplink channels and one or more downlink channels. That an independent first beam is used for uplink/downlink transmission means that different common beams are used for uplink transmission and downlink transmission. For example, one uplink first beam is used for one or more uplink channels, and one downlink first beam is used for one or more downlink channels. The one or more uplink channels may be at least one of a PUSCH, a PUCCH, and a PRACH. The one or more downlink channels may be at least one of a PDSCH and a PDCCH. The network device may configure the mode of the first beam to at least one of the foregoing modes via RRC signaling, or may configure a switch for each mode. When the switch is configured to be on, it indicates that the mode of the common beam is used.

In another possible implementation, the network device may configure a quantity of first beam sets by using the first information. For example, the network device may configure one or more first beam sets by using the first information, where each first beam set includes one or more first beam subsets, and each first beam subset includes one or more first beams. Each first beam set or first beam subset corresponds to one channel, for example, a PDCCH, a PDSCH, a PUCCH, a PUSCH, an uplink channel, a downlink channel, a control channel, or a data channel. Alternatively, each beam set or beam subset corresponds to one reference signal, for example, a CSI-RS, an SSB, or an SRS.

The CSI-RS may be specifically a CSI-RS in a resource set for which a repetition parameter is configured, a CSI-RS in a resource set whose repetition parameter is configured to be 'on', a CSI-RS in a resource set whose repetition parameter is configured to be 'off', a CSI-RS in a resource set for which a trs-info parameter is configured, a CSI-RS in a resource set for which no repetition parameter and no trs-info parameter are configured, a CSI-RS used for mobility measurement, a CSI-RS for which no beam information is configured, a CSI-RS for which beam information is configured, a periodic CSI-RS, a semi-persistent (Semi-persistent, SP) CSI-RS, an aperiodic CSI-RS, a CSI-RS used for measurement of a reference signal received power (Reference signal received power, RSRP)/signal to interference plus noise ratio (Signal to Interference plus Noise Ratio, SINR), or a CSI-RS used for measurement of a channel state information-reference signal/channel quality indicator (Channel Quality Indicator, CQI)/precoding matrix indicator (Precoding Matrix Indicator, PMI)/channel rank indicator (Rank Indicator, RI).

The SRS may be specifically a codebook (codebook) SRS, a non-codebook (non-Codebook) SRS, a beam management (beam management) SRS, an antenna switch (antenna switch) SRS, a periodic SRS, a semi-persistent SRS, an aperiodic SRS, an SRS for which no beam information is configured, an SRS for which beam information is configured, an SRS for which no path loss measurement resource is configured, or an SRS for which a path loss measurement resource is configured.

In another possible implementation, the network device may further configure an identifier of the first beam in the first beam set by using the first information.

S502: Configure a parameter of the first beam set.

For example, after receiving the first information, the terminal device configures the parameter of the first beam set based on the first information, where the parameter may include at least one of a mode, a quantity, and an identifier of the first beam in the first beam set.

S503: Send second information.

For example, the network device sends the second information to the terminal device. After configuring the parameter of the first beam set based on the first information, the terminal device determines a first beam subset by receiving the second information. For example, the network device may determine information about the first beam subset via signaling (for example, MAC CE signaling). The first beam subset includes one or more first beams. Because there are a plurality of different types of common beams, for example, a first beam used for uplink and downlink transmission, a first beam used for uplink or downlink transmission, a first beam used for uplink transmission, and a first beam used for downlink transmission, the terminal device needs to determine, via signaling, a specific common beam that is a type of the first beam in the first beam subset indicated by the second information. That the second information indicates the first beam subset may also be considered as activating the first beam subset.

S504: Determine the first beam subset.

For example, after receiving the second information, the terminal device determines the first beam subset based on the second information.

In a possible implementation, the second information is carried in first MAC CE signaling, and a type of the first beam in the first beam subset indicated by the second information is determined based on an LCID corresponding to the first MAC CE signaling. The type is at least one of the following: a first beam used for uplink and downlink transmission, a first beam used for uplink transmission, and a first beam used for downlink transmission.

Different LCIDs are used for MAC CE signaling corresponding to different types of common beams. The terminal device may determine, based on an LCID, the type that is of the first beam in the first beam subset and that is indicated by the first MAC CE signaling.

In another possible implementation, the second information is carried in first MAC CE signaling, and a type of the first beam in the first beam subset is determined based on an LCID corresponding to the first MAC CE signaling. The type is at least one of the following: a first beam used for uplink and downlink transmission, and a first beam used for uplink or downlink transmission. Different LCIDs are used for MAC CE signaling corresponding to different types of common beams. The terminal device may determine, based on an LCID, the type that is of the first beam in the first beam subset and that is indicated by the first MAC CE signaling.

In another possible implementation, the terminal device may determine a type of the first beam in the first beam subset based on a first field in the first MAC CE, where the type of the first beam in the first beam subset is at least one of the following: a first beam used for uplink and downlink transmission, a first beam used for uplink transmission, and a first beam used for downlink transmission.

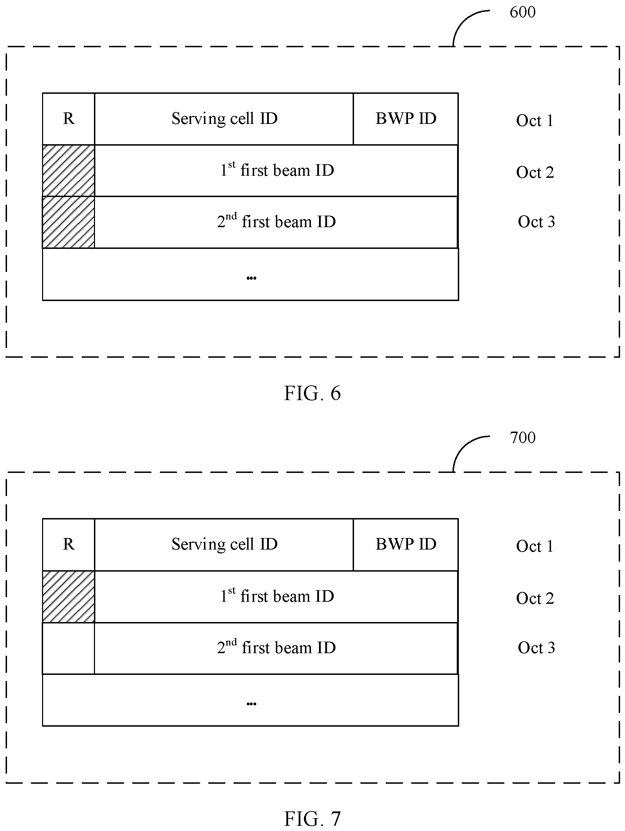

Specifically, the terminal device may identify the type of the first beam in the first beam subset based on the first field in the first MAC CE signaling. Each field value represents a type of a common beam, and the first field may be 2 bits. For example, the first field may be used to distinguish between the first beam used for uplink and downlink transmission, the first beam used for uplink transmission, and the first beam used for downlink transmission. FIG. 6 is a schematic diagram of a location of a first field in first MAC CE signaling according to an embodiment of this application. The first field may be first two bits or last two bits in a first octet in the first MAC CE signaling, or first two bits or last two bits in a second octet in the first MAC CE signaling, or first two bits or last two bits in a third octet in the first MAC CE signaling. The two bits may also be formed by one bit in each of any two octets, for example, formed by 1^{st} bits or last bits in the two octets. The two octets may be a first octet and a second octet, the second octet and a third octet, the third octet and a fourth octet, last two octets, other two adjacent octets, or the like. As shown in FIG. 6, 1^{st} bits in the second octet and the third octet form the two bits. The common beam included in the first MAC CE signaling may alternatively be the first beam used for uplink transmission and the first beam used for downlink transmission, that is, include both the first beam used for uplink transmission and the first beam used for downlink transmission. A field such as the first field may be used to indicate this type. When both the first beam used for uplink transmission and the first beam used for downlink transmission are included, two parts of bits may respectively indicate the first beam used for uplink transmission and the first beam used for downlink transmission. The two parts of bits may indicate a beam ID of the first beam used for uplink and downlink transmission, or may be two bitmaps that respectively indicate the first beam used for uplink transmission and the first beam used for downlink transmission.

When a common beam ID indicates a common beam, whether a next common beam ID exists may be indicated by using one bit in an octet in which a last common beam ID is located. If the next common beam ID does not exist, it indicates that the current common beam ID is a last one of activated common beams.

In another possible implementation, the type of the first beam in the first beam subset indicated by the second information is determined based on the mode that is of the first beam and that is configured by the network device. Specifically, if the mode of the first beam in the first beam set is that a same first beam is used for uplink and downlink transmission, the type of the first beam in the first beam subset indicated by the second information is the first beam used for uplink and downlink transmission. If the mode of the first beam in the first beam set is that separate first beams are used for uplink and downlink transmission, the type of the first beam in the first beam subset indicated by the second information is the first beam used for uplink or downlink transmission. Whether the type of the first beam in the first beam subset indicated by the second information is specifically the first beam used for uplink transmission or the first beam used for downlink transmission cannot be determined, and may be further determined with reference to another method.

In another possible implementation, the terminal device may determine a type of the first beam in the first beam subset based on sent fourth information, where the type of the first beam in the first beam subset is at least one of the following: a first beam used for uplink and downlink transmission, a first beam used for uplink or downlink transmission, a first beam used for uplink transmission, and a first beam used for downlink transmission.

Specifically, the fourth information may be capability reporting information of the terminal device. To be specific, the terminal device determines the type of the first beam in the first beam subset by sending the capability reporting information. For example, if the terminal device reports that a case in which a same first beam is used for uplink and downlink transmission is supported, or reports that an uplink beam and a downlink beam are reciprocal of each other, optionally, the type of the first beam in the first beam subset indicated by the second information is the first beam used for uplink and downlink transmission. If the terminal device reports that a case in which a same first beam is used for uplink and downlink transmission is not supported, or reports that an uplink beam and a downlink beam have no reciprocity, optionally, the type of the first beam in the first beam subset indicated by the second information is the first beam used for uplink or downlink transmission, that is, the first beam used for uplink transmission or the first beam used for downlink transmission is activated by using activation signaling. Whether the type of the first beam in the first beam subset indicated by the second information is specifically the first beam used for uplink transmission or the first beam used for downlink transmission cannot be determined, and may be further determined with reference to another method.

It can be understood that the terminal device may directly determine the type of the first beam in the first beam subset without performing capability reporting. Alternatively, the terminal device may directly determine the type of the first beam in the first beam subset without determining whether an uplink beam and a downlink beam are reciprocal of each other. This is not limited in this application.

In another possible implementation, the terminal device may determine a type of the first beam in the first beam subset by using an index of the first beam in a group of first beam subsets in the second information, where the type is at least one of the following: a first beam used for uplink and downlink transmission, a first beam used for uplink or downlink transmission, a first beam used for uplink transmission, and a first beam used for downlink transmission.

In another possible implementation, the terminal device may determine a type of the first beam in the first beam subset by using a bitmap in the second information, where the type is at least one of the following: a first beam used for uplink and downlink transmission, a first beam used for uplink or downlink transmission, a first beam used for uplink transmission, and a first beam used for downlink transmission.

When it is determined that the first beam in the first beam subset indicated by the second information is one of the first beam used for uplink transmission or the first beam used for downlink transmission, the type of the first beam in the first beam subset may be further determined by using one or more of the following methods.

In a possible implementation, it is determined, based on an LCID corresponding to the first MAC CE signaling, whether the type of the first beam in the first beam subset is the first beam used for uplink transmission or the first beam used for downlink transmission. For example, with reference to the foregoing method, the terminal reports specific uplink/downlink beam reciprocity, or the network device configures that a mode of the first beam in the first beam set is that separate first beams are used for uplink and downlink transmission, to determine whether the first MAC CE activates the first beam used for uplink transmission or the first beam used for downlink transmission. In this case, whether the first MAC CE signaling specifically activates the first beam used for uplink transmission or the first beam used for downlink transmission may be further determined based on the LCID corresponding to the first MAC CE.

In another possible implementation, one MAC CE can activate only one of the first beam used for uplink transmission and the first beam used for downlink transmission. A second field in the MAC CE is used to identify whether the MAC CE activates the first beam used for uplink transmission or the first beam used for downlink transmission. The second field may be one bit. The second field may be a 1^{st} bit or a last bit in a first octet in the MAC CE, or a 1^{st} bit or a last bit in a second octet, or a 1^{st} bit or a last bit in a third octet. FIG. 7 is a schematic diagram of a location of a second field in first MAC CE signaling according to an embodiment of this application. As shown in FIG. 7, a 1^{st} bit (a shadow part) in a second octet is used to identify whether the MAC CE activates a first beam used for uplink transmission or a first beam used for downlink transmission.

The MAC CE may also be used to activate a first beam used for uplink and downlink transmission. In other words, when an LCID corresponding to the MAC CE represents the first beam used for uplink and downlink transmission, or a mode of a first beam is that a same first beam is used for uplink and downlink transmission, a terminal device may determine that a common beam activated by the MAC CE is the first beam used for uplink and downlink transmission. When the first beam used for uplink and downlink transmission is activated, the foregoing one bit has no specific meaning (because uplink and downlink do not need to be distinguished). The terminal device may ignore the one bit, or the one bit may be used for other indication information. Specific indication information is not limited herein in this application.

In another possible implementation, the terminal device may determine a type of the first beam in the first beam subset based on a third field and a fourth field in second information, where the type of the first beam in the first beam subset is at least one of the following: a first beam used for uplink transmission and a first beam used for downlink transmission.

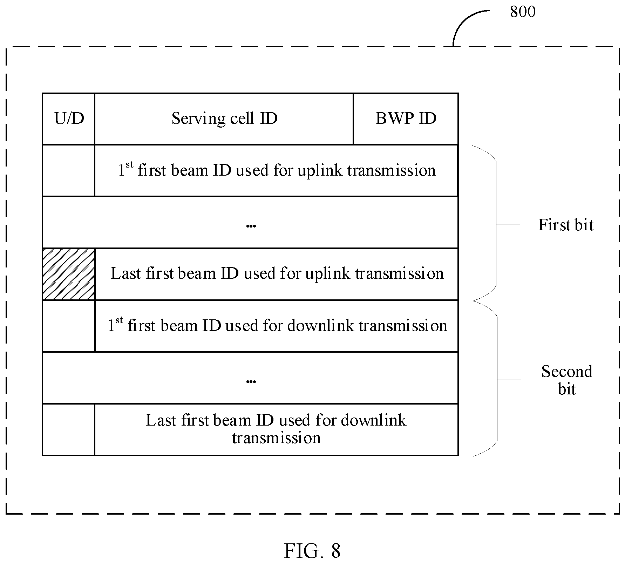

Specifically, the terminal device may indicate, by using a third field in the MAC CE signaling, whether one or two of the first beam used for uplink transmission and the first beam used for downlink transmission are activated. The third field may be one bit. For example, the first MAC CE signaling includes two parts of bits: a first bit and a second bit. Both the first bit and the second bit include a plurality of octets, and each octet includes eight bits. The first bit indicates the first beam used for uplink transmission, and the second bit indicates the first beam used for downlink transmission; or the first bit indicates the first beam used for downlink transmission, and the second bit indicates the first beam used for uplink transmission. The first bit always exists, and whether the second bit exists may be indicated by the third field. The third field may be a 1^{st} bit or a last bit in a first octet in the MAC CE signaling, or a 1^{st} bit or a last bit in a second octet, or a 1^{st} bit or a last bit in a third octet, or a 1^{st} bit or a last bit in a first octet in a first bit, or a 1^{st} bit or a last bit in a last octet in a first bit. FIG. 8 is a schematic diagram of a location of a third field in first MAC CE signaling according to an embodiment of this application. As shown in FIG. 8, the third field is a 1^{st} bit (a shadow part) in a first octet in a first bit. Meanings of the first bit and the second bit may be as follows: The first bit indicates a first beam used for uplink transmission, and the second bit indicates a first beam used for downlink transmission; or the first bit indicates a first beam used for downlink transmission, and the second bit indicates a first beam used for uplink transmission. Whether the second bit exists may be determined by using the third field, to determine whether the MAC CE signaling activates one or two of the first beam used for uplink transmission and the first beam used for downlink transmission. For example, if a value of the third field is 0, it indicates that the second bit does not exist, or if a value of the third field is 1, it indicates that the second bit exists.

When the second bit does not exist, a specific type of first beam corresponding to the first bit needs to be identified, that is, the first beam used for uplink transmission or the first beam used for downlink transmission. When the second bit exists, types of first beams respectively corresponding to the first bit and the second bit also need to be distinguished. In this case, the fourth field may be used for differentiation. The fourth field may indicate the type of the first beam corresponding to the first bit, or indicate the type of the first beam corresponding to the second bit. For example, if the fourth field indicates the first beam that corresponds to the first bit and that is used for uplink transmission, the second bit corresponds to the first beam used for downlink transmission. If the fourth field indicates the first beam that corresponds to the first bit and that is used for downlink transmission, the second bit corresponds to the first beam used for uplink transmission. The fourth field may be one bit. In other words, the fourth field is for determining whether the first beam used for uplink transmission or the first beam used for downlink transmission is indicated. The fourth field may be a first bit or a last bit in a first octet in the MAC CE signaling, or a 1^{st} bit or a last bit in a second octet, or a 1^{st} bit or a last bit in a third octet, or a 1^{st} bit or a last bit in a first octet in a first bit, or a 1^{st} bit or a last bit in a last octet in a first bit. Optionally, the first bit and the second bit each may include a beam ID of the first beam, or may be a bitmap. Each bitmap indicates whether a first beam used for uplink transmission or a first beam used for downlink transmission is activated. For example, a bit value 1 indicates that a first beam of a type of the first beam corresponding to the bit is activated.

The MAC CE signaling may also be used to activate a first beam used for uplink and downlink transmission. In other words, when the MAC CE signaling determines that the first beam used for uplink and downlink transmission is activated, or when a mode of a first beam is that a same first beam is used for uplink and downlink transmission, the terminal device may determine that the first beam activated by the MAC CE signaling is the first beam used for uplink and downlink transmission. When the first beam used for uplink and downlink transmission is activated, the third field and the fourth field have no specific meanings (because the first beam used for uplink transmission and the first beam used for downlink transmission do not need to be distinguished, and there is no second bit). The terminal device may ignore the third field and the fourth field, or the third field and the fourth field may be used for other indication information. Specific indication information is not limited herein in this application.

It can be understood that the foregoing methods for determining the type of the first beam in the first beam subset may be freely combined. For example, first, the mode of the first beam in the first beam set is that separate first beams are used for uplink and downlink transmission, so that it can be determined that the type of the first beam is the first beam used for uplink transmission or the first beam used for downlink transmission. Further, whether the first beam in the first beam subset is the first beam used for uplink transmission or the first beam used for downlink transmission is determined based on the LCID corresponding to the first MAC CE signaling that carries the second information or a field in the MAC CE signaling.

In a multi-site transmission scenario, two TRPs need to indicate a common beam. Common beams of the two TRPs also need to be indicated by the MAC CE signaling. To be specific, one group of first beams used for uplink transmission is activated for each of the two TRPs, or one group of first beams used for downlink transmission is determined for each of the two TRPs. When one group of first beams used for uplink transmission is activated for each of the two TRPs, or when one group of first beams used for downlink transmission is activated for each of the two TRPs, the foregoing method for activating the first beam used for uplink and downlink transmission may be used, including a method for determining the type of the first beam and the MAC CE signaling, provided that the first beam used for uplink/downlink transmission in the foregoing method/MAC CE signaling is replaced with a common beam of a first TRP/second TRP. For example, the LCID or the field in the MAC CE is for determining whether the type of the first beam indicated in the MAC CE is the common beam of the first TRP or the common beam of the second TRP, or determine whether the type of the first beam indicated in the MAC CE is a common beam of one TRP or common beams of two TRPs.

Alternatively, a first beam used for uplink transmission and a first beam used for downlink transmission that are of two TRPs may be simultaneously activated by using one MAC CE, that is, the MAC CE may include a maximum of four groups of common beams. The four groups of common beams correspond to four parts of bits, and each part of bits indicates IDs of one group of first beams, or each part of bits is a bitmap used to activate one group of first beams. A field may indicate whether the first beam of the second TRP exists. Alternatively, a field indicates whether a first beam used for uplink transmission or a first beam used for downlink transmission exists. Alternatively, a field indicates whether a first beam used for uplink transmission or a first beam used for downlink transmission of a TRP (a first TRP or a second TRP) exists. In another possible implementation, the terminal device may determine a type of the first beam in the group of first beams based on the mode of the first beam, where the type includes at least one of the following: a first beam used for uplink and downlink transmission, a first beam used for uplink or downlink transmission, a first beam used for uplink transmission, and a first beam used for uplink transmission.

S505: Send third information.

For example, after the terminal device activates the first beam subset based on the second information, the network device sends the third information, where the third information indicates information about one or more first beams.

In a possible implementation, the third information may be downlink control information DCI indicating the first beam.

In another possible implementation, the third information is carried in the DCI, and the DCI is scrambled by using a dedicated radio network temporary identifier RNTI. When receiving the DCI scrambled by using the dedicated RNTI, the terminal device may determine that the DCI indicates the first beam.

In another possible implementation, the third information may be DCI that is scrambled by using a common RNTI and that indicates the first beam.

S506: Determine the first beam.

For example, after receiving the third information, the terminal device determines the first beam based on the third information.

Optionally, if there is only one first beam, after receiving the first information, the terminal device may directly receive the third information, and does not determine the first beam by using an indication of the second information.

In a possible implementation, the third information may be DCI indicating the first beam. A format of the downlink control information may be a format 0-3, a format 1-3, a format 2-6, or a format 4. For example, the format 0-3 indicates a first beam used for uplink transmission, and the format 1-3 indicates a first beam used for downlink transmission. The format 2-6 or the format 4 indicates a first beam used for uplink and downlink transmission. A field of the format of the downlink control information indicating the first beam includes but is not limited to one or more of the following:
a field used to identify a type of the first beam, for example, a field used to distinguish between a first beam used for uplink transmission and a first beam used for downlink transmission, where the field may reuse a field of an identifier of a DCI format; or a field indicating a function of a first DCI, where the function of the first DCI includes at least one of the following: indicating the first beam, indicating scheduled data, and indicating the first beam and indicating scheduled data; or a field indicating an identifier of the first beam, where the field may include one common beam field, indicating one of a same first beam used for uplink and downlink transmission, a first beam used for uplink transmission, and a first beam used for downlink transmission; or may include two common beam fields, indicating a first beam used for uplink transmission and a first beam used for downlink transmission, where the plurality of common beam fields may alternatively be two parts of one field; a quantity of included first beam indicator fields is related to a mode that is of the first beam in the first beam set and that is configured via RRC/whether terminal capability reporting meets uplink/downlink beam reciprocity; and when the mode that is of the first beam in the first beam set and that is configured via RRC is that a same first beam is used for uplink and downlink transmission, the DCI includes only one first beam indicator field; and when the mode that is of the first beam in the first beam set and that is configured via RRC is that separate first beams are used for uplink and downlink transmission, the DCI includes two first beam indicator fields; or when the terminal capability reporting meets uplink/downlink beam reciprocity, the DCI includes only one first beam indicator field, and when the terminal capability reporting does not meet uplink/downlink beam reciprocity, the DCI includes two first beam indicator fields;
an activation or deactivation field, where the activation or deactivation field indicates that the first DCI is used to activate the first beam or deactivate the first beam;
a carrier field, where the carrier field indicates at least one of the following: a carrier corresponding to the first beam, a carrier group corresponding to the first beam, and a carrier group of the carrier corresponding to the first beam; the field may have a plurality of functions: When the DCI is used to schedule data, the carrier field indicates a scheduled carrier; and when the DCI is not used to schedule data, the carrier field indicates a specific carrier of common beam indicated by the DCI; and whether the DCI is used to schedule data may be determined based on values of some fields in the DCI, for example, a value of a frequency domain resource allocation field is all zeros or all ones;
a frequency band field, where the frequency band field indicates a frequency band corresponding to the first beam;
a bandwidth part BWP field, indicating a specific BWP for which the first beam indicated by the DCI is used, that is, indicating a specific BWP of first beam, where the field may have a plurality of functions: When the DCI is used to schedule data, the BWP field indicates a scheduled carrier; and when the DCI is not used to schedule data, the BWP field indicates a specific BWP of first beam indicated by the DCI; and whether the DCI is used to schedule data may be determined based on values of some fields in the DCI, for example, a value of a frequency domain resource allocation field is all zeros or all ones;
a physical uplink control channel PUCCH resource indicator field, where the PUCCH resource indicator field indicates a PUCCH resource used to feed back ACK/NACK information of the first DCI; and
a HARQ feedback time indicator field, where the HARQ feedback time indicator field indicates a time interval between feeding back the ACK/NACK information of the first DCI and sending the first DCI; or the HARQ feedback time indicator field indicates a time interval between feeding back the ACK/NACK information of the first DCI and sending a PDSCH scheduled by using the first DCI; a specific type indicated by the field may be determined based on whether the DCI schedules the PDSCH; and specifically, when the DCI does not schedule data, the first type is indicated; and when the DCI schedules data, the second type is indicated.

When the first DCI indicates a first beam, it indicates that the first beam is activated or deactivated. Whether the first beam is activated or deactivated may be specifically determined by using any one of the following methods.

In a possible implementation, whether the DCI is used to activate or deactivate the first beam is determined by using a field in the DCI. The field may be the foregoing activation or deactivation field, or another field may be reused, including any one or more of the following: a frequency domain resource allocation field, a time domain resource allocation field, a modulation and coding scheme MCS field, a new data information NDI field, a redundancy version RV field, a hybrid automatic repeat request HARQ process field, a data adapter interface DAI field, a physical uplink control channel PUCCH resource field, a HARQ feedback time indicator field, an antenna port, and a demodulation reference signal DMRS sequence initialization field.

In another possible implementation, the terminal device may compare the DCI with DCI that is received last time before the DCI is received, that is, DCI that is adjacent to the DCI in terms of time and that exists before the DCI is received. When first beams indicated by two pieces of DCI are the same and values of NDI fields in the two pieces of DCI are toggled, the DCI indicates to deactivate the first beam; or when first beams indicated by two pieces of DCI are different, the DCI indicates to activate the first beam. Alternatively, without reference to an NDI indication, when first beams indicated by two pieces of DCI are the same, the DCI indicates to deactivate the first beam; or when first beams indicated by two pieces of DCI are different, the DCI indicates to activate the first beam.

The first DCI indicates one first beam, or may indicate that only the first beam is activated, and the first beam does not need to be deactivated through DCI alignment. The activated first beam may be deactivated by using a timer for alignment. For an activated first beam, a timer is started once the first beam is activated, and after duration of the timer reaches first duration, the first beam is deactivated. Specifically, after the DCI activates the first beam, the first beam takes effect within first duration starting from a first moment, where the first moment includes a slot or a symbol for sending the DCI, a slot or a symbol for sending a HARQ feedback message corresponding to the DCI, and a sum of the slot or the symbol for sending the HARQ feedback message corresponding to the DCI and K milliseconds, where K may be a value specified in a protocol, for example, a value related to a subcarrier spacing, or K may be a value indicated in the DCI, or K may be an integer greater than or equal to 1. This is not limited herein in this application. The first duration may be indicated by the DCI, may be reported by the terminal device, may be configured via RRC signaling, or may be preconfigured by a system. This is not limited in this application.

After receiving the DCI indicating the first beam, the network device needs to feed back ACK/NACK information to the network device. The terminal device uses different ACK/NACK feedback mechanisms based on whether the DCI further schedules data for transmission when the DCI indicates the first beam. For example, when the DCI includes scheduling information for data transmission, the terminal device sends ACK/NACK information of data to the network device. Specifically, the terminal device sends the ACK/NACK to the network device in a slot n+k, where n is a slot for sending a PDSCH, and k is a time interval between sending the PDSCH indicated in the DCI and feeding back the HARQ. When the DCI does not include scheduling information for data transmission, the terminal device sends ACK/NACK information of DCI to the network device. Specifically, the terminal device sends the ACK/NACK to the network device in a slot n+k, where n is a slot for sending DCI, and k is a time interval between sending the DCI indicated in the DCI and feeding back the HARQ. Whether the DCI includes scheduling information for data transmission may be determined by using a first condition, where the first condition may include one or a combination of the following: a value of a frequency domain resource allocation field in the DCI is 0, and a value of a time domain resource allocation field in the DCI is 0. The PUCCH for feeding back the ACK may be a PUCCH indicated in the DCI, or may be a preconfigured PUCCH. This is not limited herein in this application. If the DCI indicates the first beam, and does not schedule data, an ACK is fed back to a base station for the DCI. In other words, if the DCI is successfully received, the ACK is fed back. If the DCI indicates the first beam and schedules data, the ACK does not need to be fed back specially for the DCI because the PDSCH needs to feed back the ACK/NACK. One field may indicate whether data is scheduled, or one field may indicate whether the DCI indicates the first beam. The one or the combination of the following may be performing a logical AND operation, or a logical OR operation, or a hybrid operation including logical AND and logical OR on the combination.

In another possible implementation, the third information may be DCI that indicates the first beam and that is scrambled by using an RNTI indicating the first beam. A value of the RNTI may be a value in a value range 0001-FFF2 (hexadecimal), or may be a fixed value, for example, 0001, FFF2, FFF3, or FFFD. The RNTI may be a CB-RNTI or a BI-RNTI.

In another possible implementation, the third information may be DCI that indicates the first beam and that is scrambled by using an existing RNTI.

Specifically, same DCI may be used to schedule data for transmission, or may indicate the first beam. The terminal device needs to determine whether the DCI is used to schedule data for transmission or indicate the first beam. Specifically, when a second condition is met, it is determined that the DCI indicates the first beam; or when a third condition is met, it is determined that the DCI indicates scheduled data. The second condition includes but is not limited to one or a combination of the following: supporting use of the first beam is configured, for example, a switch of the first beam is configured to be on; and supporting a PDSCH in using the first beam is configured, where the PDSCH is a target channel of the first beam; and a field in the DCI specially indicates whether a TCI field indicates the first beam or a normal beam/PDSCH beam/PDSCH TCI-state, and a value of the field indicates that the TCI field indicates the first beam. The third condition may be a reverse of the second condition, that is, the third condition is naturally met if the second condition is not met. The second condition may also include but is not limited to one or a combination of the following: supporting use of the first beam is not configured, for example, a switch of the first beam is configured to be off; and supporting a PDSCH in using the first beam is not configured, or skipping supporting a PDSCH in using the first beam is configured, where the PDSCH is not a target channel of the first beam; and a field in the DCI specially indicates whether a TCI field indicates the first beam or a normal beam/PDSCH beam/PDSCH TCI-state, and a value of the field indicates that the TCI field indicates the normal beam/PDSCH beam/PDSCH TCI-state. The one or the combination of the following may be performing a logical AND operation, or a logical OR operation, or a hybrid operation including logical AND and logical OR on the combination.

The DCI may also have three functions: scheduling data for transmission and indicating the first beam, scheduling data for transmission, and indicating the first beam. One of the three functions may be indicated by using one field (for example, two bits).

When the third information is DCI that indicates the first beam and that is scrambled by using an RNTI indicating the first beam, or DCI that indicates the first beam and that is scrambled by using an existing RNTI, it may be specified that only DCI for downlink scheduling can be used to indicate the first beam. That is, one or more of DCI formats 1-0/1-1/1-2 are used to indicate the first beam. Alternatively, this may not be limited. Instead, the first beam used for downlink transmission is indicated by using DCI for downlink scheduling, and the first beam used for uplink transmission is indicated by using DCI for uplink scheduling. Meanings of the fields in the DCI are as follows:

DCI format identifier field: indicates whether the DCI indicates a first beam used for uplink transmission or a first beam used for downlink transmission. Transport field: indicates a carrier for which the first beam indicated by the DCI is used, that is, indicates a specific carrier of first beam. The field may be only one carrier or one carrier group. For example, the field includes an identifier of a carrier, indicating a carrier group in which the carrier is located. The field may have a plurality of functions: When the DCI is used to schedule data, the transport field indicates a scheduled carrier; and when the DCI is not used to schedule data, the transport field indicates a specific carrier of common beam indicated by the DCI. Whether the DCI is used to schedule data may be determined based on values of some fields in the DCI, for example, a value of a frequency domain resource allocation field is all zeros or all ones. BWP field: indicates a specific BWP for which the first beam indicated by the DCI is used, that is, indicates a specific BWP of first beam. The field may have a plurality of functions: When the DCI is used to schedule data, the BWP field indicates a scheduled carrier; and when the DCI is not used to schedule data, the BWP field indicates a specific BWP of first beam indicated by the DCI. Whether the DCI is used to schedule data may be determined based on values of some fields in the DCI, for example, a value of a frequency domain resource allocation field is all zeros or all ones. TCI field: indicates the first beam. A TCI field may be included to indicate one of a first beam used for uplink or downlink transmission, a first beam used for uplink transmission, and a first beam used for downlink transmission. Alternatively, two TCI fields may be included to indicate a first beam used for uplink and downlink transmission. A plurality of TCI fields may alternatively be two parts of one TCI field. A quantity of included TCI fields is related to a common beam mode configured via RRC/whether terminal capability reporting meets beam reciprocity between an uplink beam and a downlink beam. When the common beam mode configured via RRC is the first beam used for uplink and downlink transmission, the DCI includes only one TCI field. When the common beam mode configured via RRC is a first beam used for uplink or downlink transmission, the DCI includes two first beam indicator fields. Alternatively, when the terminal capability reporting meets uplink/downlink beam reciprocity, the DCI includes only one TCI field. When the terminal capability reporting does not meet uplink/downlink beam reciprocity, the DCI includes two TCI fields. It may be specified that when it is determined, by using the first information, that the first beam is to be used, a value of the TCI field indicates the first beam. Otherwise, a value of the TCI field indicates a normal beam, that is, a TCI-state of a single channel (for example, a PDSCH). Alternatively, when the MAC CE signaling activates a common beam, a value of the TCI field indicates the first beam. When the MAC CE signaling does not activate the first beam, a value of a TCI field indicates a common beam. Activation/deactivation field: indicates whether the DCI is used to activate the first beam or deactivate the first beam. If the DCI is used to activate the first beam, the common first beam indicated in the DCI is enabled; or if the DCI is used to deactivate the first beam, the first beam indicated in the DCI is disabled. PUCCH resource indicator field: indicates a PUCCH resource used to feed back ACK information or NACK information of the DCI. PDCCH-to-HARQ feedback field: indicates a time interval between a time point at which the ACK information or the NACK information of the DCI is fed back and a time point at which a PDCCH is sent.

After the first beam is indicated, the network device and the terminal device need to simultaneously switch to the first beam at an agreed time for sending and receiving, to avoid a transmission failure caused by asynchronous switching. That the first beam takes effect means that one or more channels/reference signals start to be transmitted by using the indicated first beam.

The agreed time may be a period of time added after the time of feeding back the ACK, for example, N symbols/slots. Alternatively, the agreed time may be a time of receiving the DCI (for example, a first or last symbol for sending the DCI) plus a period of time, for example, N symbols/slots.

If the DCI indicates the first beam and schedules data, the following methods may be used to determine whether the data needs to use a first beam indicated by the DCI or a first beam indicated last time.

Method 1: The first beam indicated by the DCI is used. Even if a data transmission time is before a time at which the first beam takes effect, the first beam is used.

Method 2: The first beam indicated last time is used. If the first beam is not indicated previously, or the first beam is not indicated in a period of time, a first beam indicated by the DCI this time is used.

Method 3: Determining is performed based on a data transmission time and a time at which the first beam takes effect. If data transmission is performed before the time at which the first beam takes effect, a first beam indicated last time is used; or if data transmission is not performed before the time at which the first beam takes effect, a beam indicated this time is used.

It may be specified that the first beam used for downlink transmission can be indicated only by using DCI (for example, one or more of DCI 1-0, DCI 1-1, and DCI 1-2) for downlink scheduling, and the first beam used for uplink transmission can be indicated only by using DCI (for example, one or more of DCI 0-0, DCI 0-1, and DCI 0-2) for uplink scheduling. A beam indicator field (not in a current protocol) is introduced into DCI for uplink scheduling to indicate the first beam. When DCI for uplink scheduling indicates a first beam, uplink data may be further scheduled, and the uplink data is transmitted by using the first beam. If the network device correctly receives data, the network device sends acknowledgment information to the terminal device, where the acknowledgment information may be DCI, a HARQ ID included in the DCI is the same as a HARQ ID in the DCI for uplink scheduling, and an NDI field is set to toggled. After K symbols/slots after the terminal device receives the acknowledgement information, the first beam used for uplink transmission takes effect. A value of K may be an integer greater than or equal to 1.

Alternatively, it is specified that both the first beam used for uplink transmission and the first beam used for downlink transmission are indicated by using DCI (for example, one or more of DCI 1-0, DCI 1-1, and DCI 1-2) for downlink scheduling. Alternatively, both the first beam used for uplink transmission and the first beam used for downlink transmission are indicated by using DCI (for example, one or more of DCI 0-0, DCI 0-1, and DCI 0-2) for uplink scheduling.

Based on the foregoing solution, a group of first beams is determined by configuring the mode of the first beam, and finally one first beam is determined, so that beams of all channels/reference signals can be unified, and uplink and downlink beams can be efficiently indicated, to avoid complex and redundant configuration/indication instructions, and reduce extra overheads.

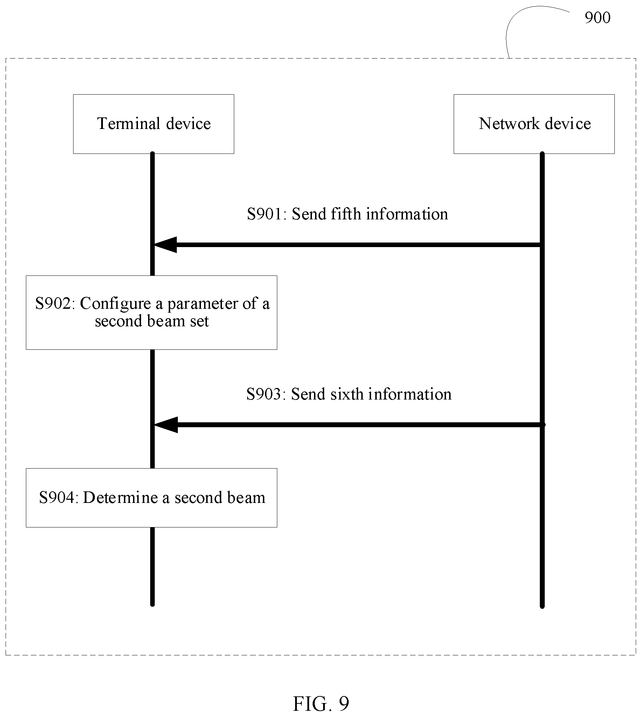

FIG. 9 is another schematic flowchart of a wireless communication method according to an embodiment of this application. The method 900 may include the following steps.

In this embodiment of this application, four types of common beams, that is, a second beam used for uplink and downlink transmission, a second beam used for uplink or downlink transmission, a second beam used for uplink transmission, and a second beam used for downlink transmission, are used as an example for description. However, another type of common beam is not excluded. This embodiment of this application is also applicable to distinguishing between other types of common beams. In addition to distinguishing between common beams, this embodiment of this application may also be used to distinguish between activation signaling of normal beams, provided that the common beam is replaced with the normal beam.

It can be understood that, in this embodiment of this application, the second beam used for uplink and downlink transmission is equivalent to an uplink and downlink common beam, the second beam used for uplink or downlink transmission is equivalent to an uplink and downlink independent common beam, the second beam used for uplink transmission is equivalent to an uplink common beam, and the second beam used for downlink transmission is equivalent to a downlink common beam. The second beam is a common beam.

S901: Send fifth information.

For example, a network device sends fifth information to a terminal device, where the fifth information is for configuring a parameter of a second beam set, the second beam set includes at least one second beam, and the second beam is a beam shared by at least one channel and/or at least one reference signal, that is, the second beam is a common beam. The network device may configure, via RRC signaling, some parameters related to the second beam, for example, a quantity and a type of the second beam.

In a possible implementation, the network device may configure a mode of the second beam in the second beam set by using the fifth information. For example, at least two common modes may be configured: A same second beam is used for uplink and downlink transmission, and independent second beams are used for uplink and downlink transmission. That a same second beam is used for uplink and downlink transmission means that the same second beam is used for uplink transmission and downlink transmission. For example, a same second beam may be used for one or more uplink channels and one or more downlink channels. That an independent second beam is used for uplink/downlink transmission means that different common beams are used for uplink transmission and downlink transmission. For example, one uplink second beam is used for one or more uplink channels, and one downlink second beam is used for one or more downlink channels. The one or more uplink channels may be at least one of a PUSCH, a PUCCH, and a PRACH. The one or more downlink channels may be at least one of a PDSCH and a PDCCH. The network device may configure the mode of the second beam to at least one of the foregoing modes via RRC signaling, or may configure a switch for each mode. When the switch is configured to be on, it indicates that the mode of the common beam is used.

In another possible implementation, the network device may configure a quantity of second beam sets by using the first information. For example, the network device may configure one or more second beam sets by using the first information, where each second beam set may include one or more second beam subsets, and each second beam subset includes one or more second beams. Each second beam set or second beam subset corresponds to one channel, for example, a PDCCH, a PDSCH, a PUCCH, a PUSCH, an uplink channel, a downlink channel, a control channel, or a data channel. Alternatively, each beam group or beam subset corresponds to one reference signal, for example, a CSI-RS, an SSB, or an SRS.

The CSI-RS may be specifically a CSI-RS in a resource set for which a repetition parameter is configured, a CSI-RS in a resource set whose repetition parameter is configured to be 'on', a CSI-RS in a resource set whose repetition parameter is configured to be 'off', a CSI-RS in a resource set for which a trs-info parameter is configured, a CSI-RS in a resource set for which no repetition parameter and no trs-info parameter are configured, a CSI-RS used for mobility measurement, a CSI-RS for which no beam information is configured, a CSI-RS for which beam information is configured, a periodic CSI-RS, a semi-persistent (Semi-persistent, SP) CSI-RS, an aperiodic CSI-RS, a CSI-RS used for measurement of a reference signal received power (Reference signal received power, RSRP)/signal to interference plus noise ratio (Signal to Interference plus Noise Ratio, SINR), or a CSI-RS used for measurement of a channel state information-reference signal/channel quality indicator (Channel Quality Indicator, CQI)/precoding matrix indicator (Precoding Matrix Indicator, PMI)/channel rank indicator (Rank Indicator, RI).

The SRS may be specifically a codebook (codebook) SRS, a non-codebook (non-Codebook) SRS, a beam management (beam management) SRS, an antenna switch (antenna switch) SRS, a periodic SRS, a semi-persistent SRS, an aperiodic SRS, an SRS for which no beam information is configured, an SRS for which beam information is configured, an SRS for which no path loss measurement resource is configured, or an SRS for which a path loss measurement resource is configured.

In another possible implementation, the network device may further configure an identifier of the second beam by using the first information.

S902: Configure a parameter of the second beam set.

For example, after receiving the first information, the terminal device configures a parameter of the second beam based on the first information, where the parameter may include at least one of a mode, a quantity, and an identifier of the second beam set.

S903: Send sixth information.

For example, the network device sends the sixth information to the terminal device. After configuring the parameter of the second beam set based on the fifth information, the terminal device determines one or more second beams by receiving the sixth information. For example, the network device may determine information about a second beam via signaling (for example, MAC CE signaling). Because there are a plurality of different types of common beams, for example, a second beam used for uplink and downlink transmission, a second beam used for uplink or downlink transmission, a second beam used for uplink transmission, and a second beam used for downlink transmission, the terminal device needs to determine, via signaling, a specific common beam that is a type of the second beam indicated by the sixth information. That the second information indicates one second beam may also be considered as activating one first beam.

S904: Determine the second beam.

For example, after receiving the sixth information, the terminal device determines one or more second beams based on the sixth information.

In a possible implementation, the second information is carried in second MAC CE signaling, and a type of the second beam indicated by the sixth information is determined based on an LCID corresponding to the second MAC CE signaling. The type is at least one of the following: a second beam used for uplink and downlink transmission, a second beam used for uplink transmission, and a second beam used for downlink transmission.

Different LCIDs are used for MAC CE signaling corresponding to different types of common beams. The terminal device may determine, based on an LCID, the type of the second beam indicated by the second MAC CE signaling.

It can be understood that determining the one or more second beams based on the sixth information may also be understood as activating the one or more second beams.

In another possible implementation, the second information is carried in second MAC CE signaling, and a type of the second beam is determined based on an LCID corresponding to the second MAC CE signaling. The type is at least one of the following: a second beam used for uplink and downlink transmission, and a second beam used for uplink or downlink transmission. Different LCIDs are used for MAC CE signaling corresponding to different types of common beams. The terminal device may determine, based on an LCID, the type of the second beam indicated by the second MAC CE signaling.

In another possible implementation, the terminal device may determine a type of the second beam based on a first field in the second MAC CE, where the type of the second beam is at least one of the following: a second beam used for uplink and downlink transmission, a second beam used for uplink transmission, and a second beam used for downlink transmission.

Specifically, the terminal device may distinguish between types of various common beams based on the first field in the second MAC CE signaling. For a method for distinguishing between the types of the various common beams based on the first field in the second MAC CE signaling, refer to the method for distinguishing between the types of the various common beams based on the first field in the first MAC CE signaling in step S504. For brevity, details are not described herein in this application.

In another possible implementation, the type of the second beam indicated by the sixth information is determined based on the mode that is of the second beam and that is configured by the network device. Specifically, if the mode of the second beam is that a same second beam is used for uplink and downlink transmission, the beam type indicated by the sixth information is the second beam used for uplink and downlink transmission. If the mode of the second beam is that independent second beams are used for uplink and downlink transmission, the beam type indicated by the sixth information is the second beam used for uplink or downlink transmission. Whether the beam type indicated by the sixth information is specifically the second beam used for uplink transmission or the second beam used for downlink transmission cannot be determined, and may be further determined with reference to another method.

In another possible implementation, the terminal device may determine a type of the second beam based on sent seventh information, where the type of the second beam is at least one of the following: a second beam used for uplink and downlink transmission, a second beam used for uplink or downlink transmission, a second beam used for uplink transmission, and a second beam used for downlink transmission.

Specifically, the seventh information is terminal capability information. For a method in which the terminal device may determine the type of the second beam based on the sent seventh information, refer to the method in which the terminal device may determine the type of the first beam based on the sent fourth information in S504. For brevity, details are not described herein again.

In another possible implementation, the terminal device may determine a type of the second beam by using an index of a second beam in the second information, where the type is at least one of the following: a second beam used for uplink and downlink transmission, a second beam used for uplink or downlink transmission, a second beam used for uplink transmission, and a second beam used for downlink transmission.

In another possible implementation, the terminal device may determine s type of the second beam by using a bitmap in the second information, where the type is at least one of the following: a second beam used for uplink and downlink transmission, a second beam used for uplink or downlink transmission, a second beam used for uplink transmission, and a second beam used for downlink transmission.

When it is determined that the second beam indicated by the sixth message is one of the second beam used for uplink transmission or the second beam used for downlink transmission, a specific beam needs to be further determined. One or more of the following methods may be used.

In another possible implementation, it is determined, based on an LCID corresponding to the second MAC CE signaling, whether the type of the second beam is the second beam used for uplink transmission or the second beam used for downlink transmission. For example, with reference to the foregoing method, the terminal reports specific uplink/downlink beam reciprocity, or the network device configures that a mode of the second beam is that independent second beams are used for uplink and downlink transmission, to determine whether the second MAC CE activates the second beam used for uplink transmission or the second beam used for downlink transmission. In this case, whether the second MAC CE signaling specifically activates the second beam used for uplink transmission or the second beam used for downlink transmission may be further determined based on the LCID corresponding to the second MAC CE.

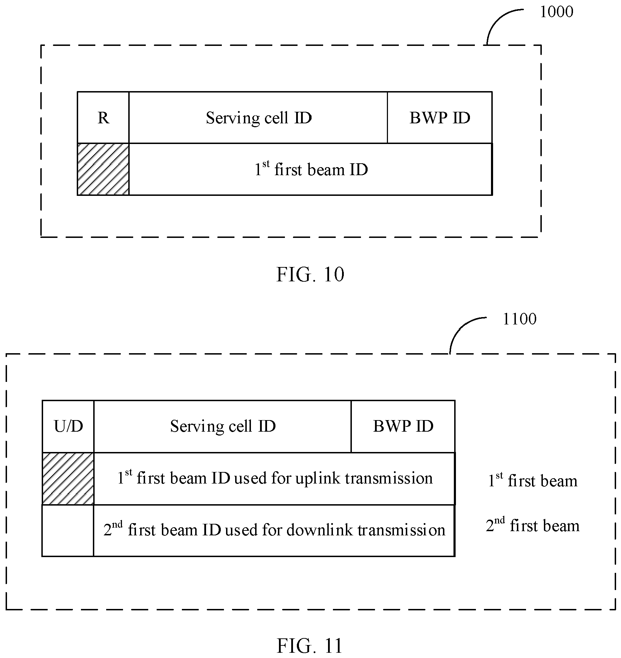

In a possible implementation, one MAC CE can activate only one of the second beam used for uplink transmission and the second beam used for downlink transmission. A second field in the MAC CE is used to identify whether the MAC CE activates the second beam used for uplink transmission or the second beam used for downlink transmission. The second field may be one bit. The second field may be a 1^{st} bit or a last bit in a first octet in the MAC CE, or a 1^{st} bit or a last bit in a second octet, or a 1^{st} bit or a last bit in a third octet. The one bit may be a 1^{st} bit or a last bit in an octet that includes a common beam ID. FIG. 10 is a schematic diagram of a location of a second field in second MAC CE signaling according to an embodiment of this application. As shown in FIG. 10, a 1^{st} bit (a shadow part) in a second octet is used to identify whether the MAC CE activates a second beam used for uplink transmission or a second beam used for downlink transmission.

The MAC CE may also be used to activate a second beam used for uplink and downlink transmission. In other words, when an LCID corresponding to the MAC CE represents the second beam used for uplink and downlink transmission, or a mode of a second beam is that a same second beam is used for uplink and downlink transmission, a terminal device may determine that a common beam activated by the MAC CE is the second beam used for uplink and downlink transmission. When the second beam used for uplink and downlink transmission is activated, the foregoing one bit has no specific meaning (because uplink and downlink do not need to be distinguished). The terminal device may ignore the one bit, or the one bit may be used for other indication information. Specific indication information is not limited herein in this application.

In another possible implementation, the terminal device may determine a type of the second beam based on a third field and a fourth field in sixth information, where the type of the second beam is at least one of the following: a second beam used for uplink transmission and a second beam used for downlink transmission.

Specifically, the terminal device may indicate, by using a third field in the second MAC CE signaling, whether one or two of the second beam used for uplink transmission and the second beam used for downlink transmission are activated. The third field may be one bit. For example, the second MAC CE signaling includes two parts of bits: a first bit and a second bit. Both the first bit and the second bit include a plurality of octets, and each octet includes eight bits. The first bit indicates the second beam used for uplink transmission, and the second bit indicates the second beam used for downlink transmission; or the first bit indicates the second beam used for downlink transmission, and the second bit indicates the second beam used for uplink transmission. The first bit always exists, and whether the second bit exists may be indicated by the third field. The third field may be a 1^{st} bit or a last bit in a first octet in the MAC CE signaling, or a 1^{st} bit or a last bit in a second octet, or a 1^{st} bit or a last bit in a third octet, or a 1^{st} bit or a last bit in a first octet in a first bit, or a 1^{st} bit or a last bit in a last octet in a first bit. FIG. 11 is a schematic diagram of a location of a third field in second MAC CE signaling according to an embodiment of this application. As shown in FIG. 11, one piece of MAC CE signaling may include two common beam IDs. A first common beam ID exists by default, and whether a second common beam ID exists is indicated by a 1^{st} bit or a last bit in an octet in which the first common beam ID is located. Meanings of the first bit and the second bit may be as follows: The first bit indicates a second beam used for uplink transmission, and the second bit indicates a second beam used for downlink transmission; or the first bit indicates a second beam used for downlink transmission, and the second bit indicates a second beam used for uplink transmission. Whether the second bit exists may be determined by using the third field, to determine whether the MAC CE signaling activates one or two of the second beam used for uplink transmission and the second beam used for downlink transmission.

When the second bit does not exist, a specific type of second beam corresponding to the first bit needs to be identified, that is, an uplink common beam or a downlink common beam. When the second bit exists, types of common beams respectively corresponding to the first bit and the second bit also need to be distinguished. In this case, the fourth field may be used for differentiation. The fourth field may indicate the type of the first beam corresponding to the first bit, or indicate the type of the first beam corresponding to the second bit. For example, if the fourth field indicates that the first bit corresponds to an uplink common beam, the second bit corresponds to a downlink common beam naturally. If the fourth field indicates that the first bit corresponds to a downlink common beam, the second bit corresponds to an uplink common beam naturally. The fourth field may be one bit. In other words, the fourth field is for determining whether the second beam used for uplink transmission or the second beam used for downlink transmission is indicated. The fourth field may be a first bit or a last bit in a first octet in the MAC CE signaling, or a 1^{st} bit or a last bit in a second octet, or a 1^{st} bit or a last bit in a third octet, or a 1^{st} bit or a last bit in a first octet in a first bit, or a 1^{st} bit or a last bit in a last octet in a first bit.

The MAC CE signaling may also be used to activate a second beam used for uplink and downlink transmission. In other words, when the MAC CE signaling determines that the second beam used for uplink and downlink transmission is activated, or when a mode of a second beam is that a same second beam is used for uplink and downlink transmission, the terminal device may determine that the second beam activated by the MAC CE signaling is the second beam used for uplink and downlink transmission. When the second beam used for uplink and downlink transmission is activated, the third field and the fourth field have no specific meanings (because the second beam used for uplink transmission and the second beam used for downlink transmission do not need to be distinguished, and there is no second bit). The terminal device may ignore the third field and the fourth field, or the third field and the fourth field may be used for other indication information. Specific indication information is not limited herein in this application.

The foregoing methods for determining the type of the second beam may be combined. For example, the configured mode of the second beam is that independent second beams are used for uplink and downlink transmission, so that it can be determined that the type of the second beam is the second beam used for uplink transmission or the second beam used for downlink transmission. Then, whether the second beam is the second beam used for uplink transmission or the second beam used for downlink transmission is determined based on the LCID corresponding to the second MAC CE signaling that carries the sixth information or a field in the second MAC CE signaling.

In a multi-site transmission scenario, two TRPs need to indicate a common beam. Common beams of the two TRPs also need to be indicated by the MAC CE signaling. To be specific, one second beam used for uplink transmission is activated for each of the two TRPs, or one second beam used for downlink transmission is determined for each of the two TRPs. When one second beam used for uplink transmission is activated for each of the two TRPs, or when one second beam used for downlink transmission is activated for each of the two TRPs, the foregoing method for activating the second beam used for uplink and downlink transmission may be used, including a method for determining the type of the second beam and the MAC CE signaling, provided that the second beam used for uplink/downlink transmission in the foregoing method/MAC CE signaling is replaced with a common beam of a first TRP/second TRP. For example, the LCID or the field in the MAC CE is for determining whether the type of the second beam indicated in the MAC CE is the common beam of the first TRP or the common beam of the second TRP, or determine whether the type of the second beam indicated in the MAC CE is a common beam of one TRP or common beams of two TRPs.

Alternatively, a second beam used for uplink transmission and a second beam used for downlink transmission that are of two TRPs may be simultaneously activated by using one MAC CE, that is, the MAC CE may include a maximum of four groups of common beams. The four groups of common beams correspond to four parts of bits, and each part of bits indicates IDs of one group of second beams, or each part of bits is a bitmap used to activate one group of second beams. A field may indicate whether the second beam of the second TRP exists. Alternatively, a field indicates whether a second beam used for uplink transmission or a second beam used for downlink transmission exists. Alternatively, a field indicates whether a second beam used for uplink transmission or a second beam used for downlink transmission of a TRP (a first TRP or a second TRP) exists. In another possible implementation, the terminal device may determine a type of the second beam in the group of second beams based on the mode of the second beam, where the type includes at least one of the following: a second beam used for uplink and downlink transmission, a second beam used for uplink or downlink transmission, a second beam used for uplink transmission, and a second beam used for uplink transmission.

Based on the foregoing solution, a second beam is determined by configuring a mode of the second beam, so that beams of all channels/reference signals can be unified, and uplink and downlink beams can be efficiently indicated, to avoid complex and redundant configuration/indication instructions, and reduce extra overheads.

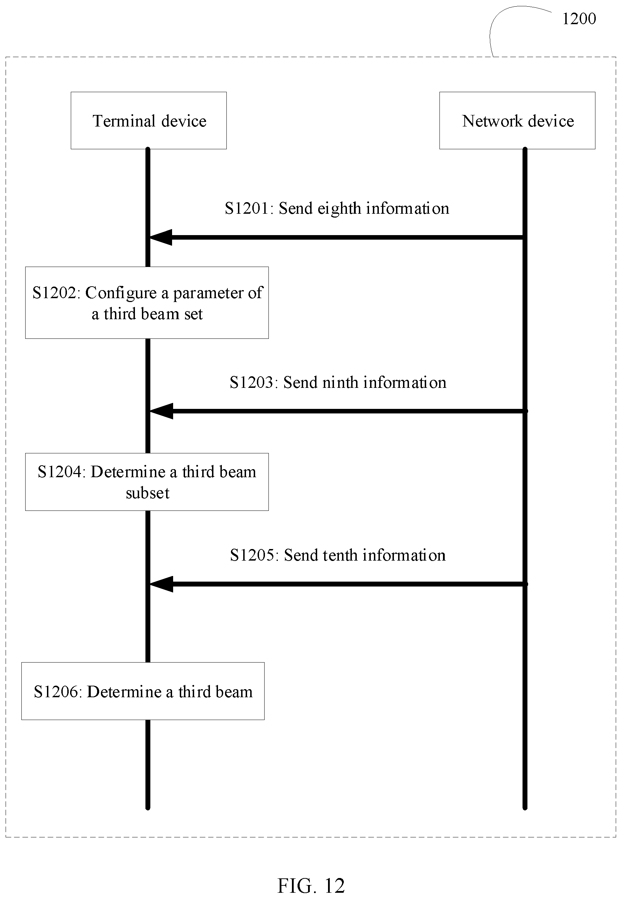

FIG. 12 is a schematic flowchart of a wireless communication method according to an embodiment of this application. The method 1200 may include the following steps.

In this embodiment of this application, four types of common beams, that is, a first beam used for uplink and downlink transmission, a first beam used for uplink or downlink transmission, a first beam used for uplink transmission, and a first beam used for downlink transmission, are used as an example for description. However, another type of common beam is not excluded. This embodiment of this application is also applicable to distinguishing between other types of common beams. In addition to distinguishing between common beams, this embodiment of this application may also be used to distinguish between activation signaling of normal beams, provided that the common beam is replaced with the normal beam.

It can be understood that, in this embodiment of this application, the first beam used for uplink and downlink transmission is equivalent to an uplink and downlink common beam, the first beam used for uplink or downlink transmission is equivalent to an uplink and downlink independent common beam, the first beam used for uplink transmission is equivalent to an uplink common beam, and the first beam used for downlink transmission is equivalent to a downlink common beam.

S 1201: Send eighth information.

For example, a network device sends eighth information to a terminal device, where the eighth information is for configuring a parameter of a third beam in a third beam set, and the third beam is a beam shared by at least one channel and/or at least one reference signal, that is, the third beam is a common beam. The network device may configure, via RRC signaling, some parameters related to the third beam in the third beam set, for example, a quantity and a type. For descriptions of a method for configuring a parameter of the third beam set by using the eighth information, refer to the method for configuring the parameter of the first beam set by using the first information in step S501. For brevity, details are not described herein again.

S1202: Configure a parameter of the third beam set.

For example, after receiving the eighth information, the terminal device configures the parameter of the third beam set based on the eighth information, where the parameter may include at least one of a mode, a quantity, and an identifier of the third beam in the third beam set.

S1203: Send ninth information.

For example, the network device sends the ninth information to the terminal device. After configuring the parameter of the third beam set based on the eighth information, the terminal device determines a third beam subset by receiving the ninth information, where the third beam subset includes at least one third beam. For example, the network device may determine information about the third beam subset via signaling (for example, MAC CE signaling). For example, a type of the third beam in the third beam subset includes a third beam used for uplink and downlink transmission, a third beam used for uplink or downlink transmission, a third beam used for uplink transmission, and a third beam used for downlink transmission. Therefore, the terminal device needs to determine a specific type of common beam that is the third beam in the third beam subset indicated by the ninth message. That the ninth information indicates the third beam subset may also be considered as activating the third beam subset.

S1204: Determine the third beam subset.

For example, after receiving the ninth information, the terminal device determines the third beam subset based on the ninth information. For a method for determining the third beam by the terminal device based on the ninth information, refer to the method for determining the first beam in S504. For brevity, details are not described herein again.

S1205: Send a tenth message.

For example, after the terminal device indicates/activates the third beam subset based on the ninth information, the network device sends tenth information, where the tenth information indicates information about one or more third beams, and the third beam belongs to the third beam subset.

S1206: Determine the third beam.

The terminal device determines one or more third beams based on the tenth message. Optionally, the tenth message may be MAC CE signaling. For a method for determining the one or more third beams by the terminal device based on the tenth information (MAC CE signaling), refer to the method for determining the second beam in S904. For brevity, details are not described herein again.

Based on the foregoing solution, a third beam is determined by configuring a mode of the third beam, so that beams of all channels/reference signals can be unified, and uplink and downlink beams can be efficiently indicated, to avoid complex and redundant configuration/indication instructions, and reduce extra overheads.

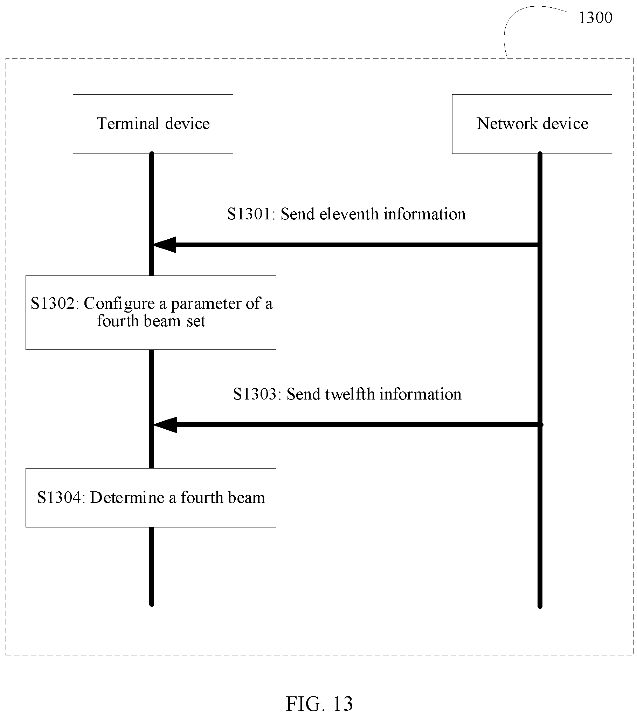

FIG. 13 is another schematic flowchart of a wireless communication method according to an embodiment of this application. The method 1300 may include the following steps.

In this embodiment of this application, four types of common beams, that is, a first beam used for uplink and downlink transmission, a first beam used for uplink or downlink transmission, a first beam used for uplink transmission, and a first beam used for downlink transmission, are used as an example for description. However, another type of common beam is not excluded. This embodiment of this application is also applicable to distinguishing between other types of common beams. In addition to distinguishing between common beams, this embodiment of this application may also be used to distinguish between activation signaling of normal beams, provided that the common beam is replaced with the normal beam.

It can be understood that, in this embodiment of this application, the first beam used for uplink and downlink transmission is equivalent to an uplink and downlink common beam, the first beam used for uplink or downlink transmission is equivalent to an uplink and downlink independent common beam, the first beam used for uplink transmission is equivalent to an uplink common beam, and the first beam used for downlink transmission is equivalent to a downlink common beam.

S1301: Send eleventh information.

For example, a network device sends eleventh information to a terminal device, where the eleventh information is for configuring a parameter of a fourth beam, and the fourth beam is a beam shared by at least one channel and/or at least one reference signal, that is, the fourth beam is a common beam. The network device may configure, via RRC signaling, some parameters related to the fourth beam, for example, a quantity and a type of the fourth beam. For a method for configuring the parameter of the fourth beam by the network device by using the eleventh information, refer to the method for configuring the parameter of the second beam by the network device by using the fifth information in S901. For brevity, details are not described herein again.

S1302: Configure a parameter of the fourth beam set.

For example, after receiving the eleventh information, the terminal device configures the parameter of the fourth beam set based on the eleventh information, where the parameter may include at least one of a mode, a quantity, and an identifier of the fourth beam in the fourth beam set.

S1303: Send twelfth information.

For example, the network device sends twelfth information, where the twelfth information indicates information about one or more fourth beams. For descriptions of the twelfth information, refer to the descriptions of the third information in step S505. For brevity, details are not described herein again.

S1304: Determine the fourth beam.

For example, after receiving the twelfth information, the terminal device determines the one or more fourth beams based on the twelfth information. For a method for determining the fourth beam by the terminal device by using the twelfth information, refer to the descriptions of determining the first beam by the terminal device by using the third information in step S506. For brevity, details are not described herein again.

Based on the foregoing solution, a fourth beam is determined by configuring a mode of the fourth beam, so that beams of all channels/reference signals can be unified, and uplink and downlink beams can be efficiently indicated, to avoid complex and redundant configuration/indication instructions, and reduce extra overheads.

Embodiments described in this specification may be independent solutions, or may be combined based on internal logic. All these solutions fall within the protection scope of this application.

It may be understood that, in the foregoing method embodiments, the methods and the operations implemented by the terminal device may alternatively be implemented by a component (for example, a chip or a circuit) that can be used in the terminal device, and the methods and the operations implemented by the network device may alternatively be implemented by a component (for example, a chip or a circuit) that can be used in the network device.

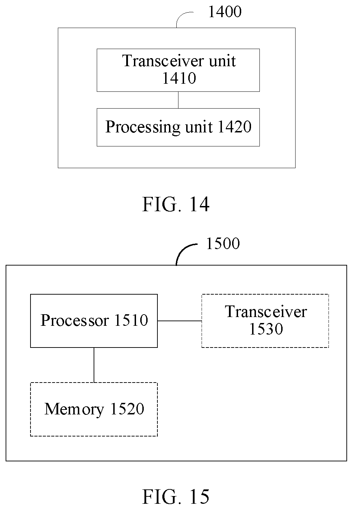

The foregoing describes, in detail with reference to FIG. 5 to FIG. 13, the methods provided in embodiments of this application. The following describes, in detail with reference to FIG. 14 to FIG. 17, communication apparatuses provided in embodiments of this application. It can be understood that descriptions of apparatus embodiments correspond to the descriptions of the method embodiments. Therefore, for content that is not described in detail, refer to the foregoing method embodiments. For brevity, details are not described herein again.

The foregoing mainly describes, from a perspective of interaction between network elements, the solutions provided in embodiments of this application. It may be understood that, to implement the foregoing functions, each network element such as a transmitting device or a receiving device includes a corresponding hardware structure and/or software module for performing each function. A person skilled in the art should be aware that, units and algorithm steps in the examples described with reference to embodiments disclosed in this specification can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into the functional modules may be performed on the transmitting device or the receiving device based on the foregoing method examples. For example, each functional module may be obtained through division based on each corresponding function, or two or more functions may be integrated in one processing module. The integrated module may be implemented in a form of hardware, or may be implemented in a form of a software functional module. It is to be noted that, in embodiments of this application, division into the modules is an example and is merely logical function division, and may be other division in an actual implementation. An example in which each functional module is obtained through division based on each corresponding function is used below for description.

FIG. 14 is a schematic block diagram of a communication apparatus according to an embodiment of this application. The communication apparatus 1400 includes a transceiver unit 1410 and a processing unit 1420. The transceiver unit 1410 may implement a corresponding communication function, and the processing unit 1410 is configured to process data. The transceiver unit 1410 may also be referred to as a communication interface or a communication unit.

Optionally, the communication apparatus 1400 may further include a storage unit. The storage unit may be configured to store instructions and/or data. The processing unit 1420 may read the instructions and/or the data in the storage unit, so that the communication apparatus implements the foregoing method embodiments.

The communication apparatus 1400 may be configured to perform actions performed by the terminal device in the foregoing method embodiment. In this case, the communication apparatus 1400 may be the terminal device or a component that can be configured for the terminal device. The transceiver unit 1410 is configured to perform a receiving and sending related operation on the terminal device side in the foregoing method embodiment. The processing unit 1420 is configured to perform a processing related operation on the terminal device side in the foregoing method embodiment.

Alternatively, the communication apparatus 1400 may be configured to perform actions performed by the network device in the foregoing method embodiment. In this case, the communication apparatus 1400 may be the network device or a component that can be configured for the network device. The transceiver unit 1410 is configured to perform a receiving and sending related operation on the network device side in the foregoing method embodiment. The processing unit 1420 is configured to perform a processing related operation on the network device side in the foregoing method embodiment.

In a design, the communication apparatus 1400 is configured to perform actions performed by the terminal device in the embodiment shown in FIG. 5, the transceiver unit 1410 is configured to perform S501, S503, and S505, and the processing unit 1420 is configured to perform S502, S504, and S506.

In an example, the communication apparatus 1400 is configured to perform actions performed by the terminal device in the embodiment shown in FIG. 9, the transceiver unit 1410 is configured to perform S901 and S903, and the processing unit 1420 is configured to perform S902 and S904.

In another example, the communication apparatus 1400 is configured to perform actions performed by the terminal device in the embodiment shown in FIG. 12, the transceiver unit 1410 is configured to perform S1201, S1203, and S 1205, and the processing unit 1420 is configured to perform S1202, S1204, and S 1206.

In still another example, the communication apparatus 1400 is configured to perform actions performed by the terminal device in the embodiment shown in FIG. 13, the transceiver unit 1410 is configured to perform S1301 and S1303, and the processing unit 1420 is configured to perform S1302 and S1304.

The communication apparatus 1400 may implement steps or procedures performed by the terminal device in the method 500, the method 900, the method 120, and the method 1300 according to embodiments of this application. The communication apparatus 1400 may include units configured to perform the method performed by the terminal device in the method 500 in FIG. 5, the method 900 in FIG. 9, the method 1200 in FIG. 12, and the method 1300 in FIG. 13. In addition, the units in the communication apparatus 1400 and the foregoing other operations and/or functions are used to implement corresponding procedures of the method 500 in FIG. 5, the method 900 in FIG. 9, the method 1200 in FIG. 12, and the method 1300 in FIG. 13.

When the communication apparatus 1400 is configured to perform the method 500 in FIG. 5, the transceiver unit 1410 may be configured to perform steps S501, S503, and S505 in the method 500, and the processing unit 1420 may be configured to perform steps S502, S504, and S506 in the method 500.

When the communication apparatus 1400 is configured to perform the method 900 in FIG. 9, the transceiver unit 1410 may be configured to perform steps S901 and S903 in the method 900, and the processing unit 1420 may be configured to perform steps S902 and S904 in the method 900.

When the communication apparatus 1400 is configured to perform the method 1200 in FIG. 12, the transceiver unit 1410 may be configured to perform steps S1201, S1203, and S1205 in the method 1200, and the processing unit 1420 may be configured to perform steps S1202, S1204, and S1206 in the method 1200.

When the communication apparatus 1400 is configured to perform the method 1300 in FIG. 13, the transceiver unit 1410 may be configured to perform steps S1301 and S1303 in the method 1300, and the processing unit 1420 may be configured to perform steps S1302 and S1304 in the method 1300.

It can be understood that a specific process in which the units perform the foregoing corresponding steps is described in detail in the foregoing method embodiments. For brevity, details are not described herein again.

In another design, the communication apparatus 1400 is configured to perform actions performed by the network device in the embodiment shown in FIG. 5, and the transceiver unit 1410 is configured to perform S501, S503, and S505.

In an example, the communication apparatus 1400 is configured to perform actions performed by the network device in the embodiment shown in FIG. 9, and the transceiver unit 1410 is configured to perform S901 and S903.

In another example, the communication apparatus 1400 is configured to perform actions performed by the network device in the embodiment shown in FIG. 12, and the transceiver unit 1410 is configured to perform S 1201, S1203, and S1205.

In still another example, the communication apparatus 1400 is configured to perform actions performed by the network device in the embodiment shown in FIG. 13, and the transceiver unit 1410 is configured to perform S1301 and S1303.

The communication apparatus 1400 may implement steps or procedures performed by the network device in the method 500, the method 900, the method 1200, and the method 1300 according to embodiments of this application. The communication apparatus 1400 may include units configured to perform the method performed by the network device in the method 500 in FIG. 5, the method 900 in FIG. 9, the method 1200 in FIG. 12, and the method 1300 in FIG. 13. In addition, the units in the communication apparatus 1400 and the foregoing other operations and/or functions are used to implement corresponding procedures of the method 500 in FIG. 5, the method 900 in FIG. 9, the method 1200 in FIG. 12, and the method 1300 in FIG. 13.

The processing unit 1420 in the foregoing embodiment may be implemented by at least one processor or a processor-related circuit. The transceiver unit 1410 may be implemented by a transceiver or a transceiver-related circuit. The transceiver unit 1410 may also be referred to as a communication unit or a communication interface. The storage unit may be implemented by at least one memory.

As shown in FIG. 15, an embodiment of this application further provides a communication apparatus 1500. The communication apparatus 1500 includes a processor 1510. The processor 1510 is coupled to a memory 1520. The memory 1520 is configured to store a computer program or instructions and/or data. The processor 1510 is configured to execute the computer program or the instructions and/or the data stored in the memory 1520, so that the method in the foregoing method embodiment is performed.

Optionally, the communication apparatus 1500 includes one or more processors 1510.

Optionally, as shown in FIG. 15, the communication apparatus 1500 may further include the memory 1520.

Optionally, the communication apparatus 1500 may include one or more memories 1520.

Optionally, the memory 1520 may be integrated with the processor 1510, or disposed separately.

Optionally, as shown in FIG. 15, the communication apparatus 1500 may further include a transceiver 1530. The transceiver 1530 is configured to: receive and/or send a signal. For example, the processor 1510 is configured to control the transceiver 1530 to receive and/or send a signal.

In a solution, the communication apparatus 1500 is configured to implement the operations performed by the terminal device in the foregoing method embodiments.

For example, the processor 1510 is configured to implement processing-related operations performed by the terminal device in the foregoing method embodiments, and the transceiver 1530 is configured to implement receiving and sending-related operations performed by the terminal device in the foregoing method embodiments.

In another solution, the communication apparatus 1500 is configured to implement the operations performed by the network device in the foregoing method embodiments.

For example, the processor 1510 is configured to implement processing-related operations performed by the network device in the foregoing method embodiments, and the transceiver 1530 is configured to implement receiving and sending-related operations performed by the network device in the foregoing method embodiments.

An embodiment of this application further provides a communication apparatus 1600. The communication apparatus 1600 may be a terminal device or a chip. The communication apparatus 1600 may be configured to perform operations performed by the terminal device in the foregoing method embodiments.

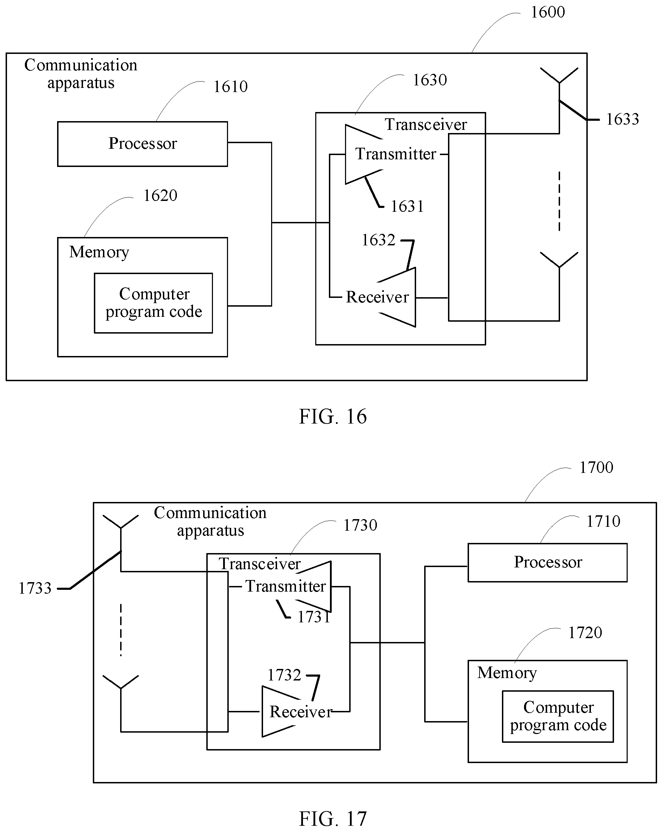

When the communication apparatus 1600 is a terminal device, FIG. 16 is a simplified schematic diagram of a structure of a terminal device. As shown in FIG. 16, the terminal device includes a processor, a memory, and a transceiver. The memory may store computer program code, and the transceiver includes a transmitter, a receiver, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, such as a touchscreen, a display, or a keyboard, is mainly configured to: receive data input by a user and output data to the user. It is to be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 16 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and a radio frequency circuit that have a transceiver function may be considered as a transceiver unit of the terminal device, and a processor that has a processing function may be considered as a processing unit of the terminal device.

As shown in FIG. 16, the terminal device includes a processor 1610, a memory 1620, and a transceiver 1630. The processor 1610 may also be referred to as a processing unit, a processing board, a processing module, a processing apparatus, or the like, and the transceiver 1630 may also be referred to as a transceiver unit, a transceiver machine, a transceiver apparatus, or the like.

Optionally, a component that is in the transceiver 1630 and that is configured to implement a receiving function may be considered as a receiving unit, and a component that is in the transceiver 1630 and that is configured to implement a sending function may be considered as a sending unit. In other words, the transceiver 1630 includes a receiver and a transmitter. The transceiver may also be sometimes referred to as a transceiver machine, a transceiver unit, a transceiver circuit, or the like. The receiver may also be sometimes referred to as a receiver, a receiving unit, a receiver circuit, or the like. The transmitter may also be sometimes referred to as a transmitter, a transmitting unit, a transmitter circuit, or the like.

For example, in an implementation, the processor 1610 is configured to perform a processing action on the terminal device side in FIG. 5. For example, the processor 1610 is configured to perform processing steps in steps S502, S504, and S506 in FIG. 5, and the transceiver 163 is configured to perform receiving and sending operations in steps S501, S503, and S505 in FIG. 5.

For another example, in an implementation, the processor 1610 is configured to perform processing steps in steps S902 and S904 in FIG. 9, and the transceiver 163 is configured to perform receiving and sending operations in steps S901 and S903 in FIG. 9.

For another example, in an implementation, the processor 1610 is configured to perform processing steps in steps S1202, S1204, and S1206 in FIG. 12, and the transceiver 163 is configured to perform receiving and sending operations in steps S1201, S1203, and S1205 in FIG. 12.

For another example, in an implementation, the processor 1610 is configured to perform processing steps in steps S 1302 and S 1304 in FIG. 13, and the transceiver 163 is configured to perform receiving and sending operations in steps S1301 and S1303 in FIG. 13.

It can be understood that FIG. 16 is merely an example instead of a limitation. The terminal device including the transceiver unit and the processing unit may not depend on the structure shown in FIG. 16.

When the communication apparatus 1600 is a chip, the chip includes a processor, a memory, and a transceiver. The transceiver may be an input/output circuit or a communication interface, and the processor may be a processing unit, a microprocessor, or an integrated circuit integrated on the chip.

An embodiment of this application further provides a communication apparatus 1700. The communication apparatus 1700 may be a network device or a chip. The communication apparatus 1700 may be configured to perform operations performed by the network device in the foregoing method embodiments.

When the communication apparatus 1700 is a network device, for example, a base station, FIG. 17 is a simplified schematic diagram of a structure of a base station. The base station includes a part 1710, a part 1720, and apart 1730. The part 1710 is mainly configured to: perform baseband processing, control the base station, and the like. The part 1710 is usually a control center of the base station, may be usually referred to as a processor, and is configured to control the base station to perform a processing operation on the network device side in the foregoing method embodiments. The part 1720 is mainly configured to store computer program code and data. The part 1730 is mainly configured to: receive and send a radio frequency signal and perform conversion between a radio frequency signal and a baseband signal. The part 1730 may be usually referred to as a transceiver unit, a transceiver machine, a transceiver circuit, a transceiver, or the like. The transceiver unit in the part 1710 may also be referred to as a transceiver machine, a transceiver, or the like. The transceiver unit includes an antenna and a radio frequency circuit. The radio frequency circuit is mainly configured to perform radio frequency processing. Optionally, a component that is in the part 1730 and that is configured to implement a receiving function may be considered as a receiver, and a component that is in the part 1730 and that is configured to implement a sending function may be considered as a transmitter. In other words, the part 1710 includes the receiver and the transmitter. The receiver may also be referred to as a receiving unit, a receiver, a receiver circuit, or the like. The transmitter may be referred to as a transmitting unit, a transmitter, a transmitter circuit, or the like.

The part 1710 and the part 1720 each may include one or more boards, and each board may include one or more processors and one or more memories. The processor is configured to: read and execute a program in the memory, to implement a baseband processing function and control a base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the part 1710 is configured to perform processing-related steps performed by the network device in the embodiment shown in FIG. 4, and the transceiver unit in the part 1730 is configured to perform receiving and sending-related steps performed by the network device in the embodiment shown in FIG. 4.

For example, in another implementation, the processor in the part 1710 is configured to perform processing-related steps performed by the network device in the embodiment shown in FIG. 5, and the part 1730 is configured to perform receiving and sending-related steps performed by the network device in the embodiment shown in FIG. 5.

It can be understood that FIG. 17 is merely an example instead of a limitation. The network device including the processor, the memory, and the transceiver may not depend on the structure shown in FIG. 17.

When the communication apparatus 1700 is a chip, the chip includes a transceiver, a memory, and a processor. The transceiver may be an input/output circuit or a communication interface. The processor is a processor, a microprocessor, or an integrated circuit integrated on the chip.

An embodiment of this application further provides a computer-readable storage medium. The computer-readable storage medium stores computer instructions used to implement the method performed by the terminal device or the method performed by the network device in the foregoing method embodiment.

For example, when the computer program is executed by a computer, the computer is enabled to implement the method performed by the terminal device or the method performed by the network device in the foregoing method embodiment.

An embodiment of this application further provides a computer program product including instructions. When the instructions are executed by a computer, the computer is enabled to implement the method performed by the terminal device or the method performed by the network device in the foregoing method embodiment.

An embodiment of this application further provides a communication system. The communication system includes the network device and the terminal device in the foregoing embodiment.

It may be clearly understood by a person skilled in the art that, for convenience and brief description, for explanations and beneficial effects of related content in any communication apparatus provided above, refer to the corresponding method embodiment provided above. Details are not described herein again.

In this embodiment of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and memory (also referred to as primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device, a network device, or a functional module that is in a terminal device or a network device and that can invoke and execute the program.

Aspects or features of this application may be implemented as a method, an apparatus, or a product that uses standard programming and/or engineering technologies. The term "product" used in this specification may cover a computer program that can be accessed from any computer-readable component, carrier or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid-state drive (solid-state drive, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but is not limited to a radio channel, and various other media that can store, include, and/or carry instructions and/or data.

It can be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It can be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It is to be noted that when the processor is a general-purpose processor, a DSP, an ASIC, an FPGA, another programmable logic device, a discrete gate or a transistor logic device, or a discrete hardware component, the memory (storage module) may be integrated into the processor.

It is to be further noted that the memory described in this specification aims to include but is not limited to these memories and any memory of another proper type.

In the several embodiments provided in this application, it can be understood that the disclosed apparatus and method may be implemented in other manners. For example, the foregoing apparatus embodiments are only examples. For example, division into the foregoing units is only logical function division, and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, and may be located in one position, or may be distributed on a plurality of network units. Some or all of the units may be selected based on actual requirements to implement the solutions provided in this application.

In addition, functional units in embodiments of this application may be integrated into one unit, or each of the units may exist alone physically, or two or more units are integrated into one unit.

All or some of the foregoing embodiments may be implemented by using software, hardware, firmware, or any combination thereof.

When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A wireless communication method, comprising:
receiving first information, wherein the first information is for configuring a parameter of a first beam set, the first beam set comprises at least one first beam, and the first beam is a beam shared by a plurality of channels and/or a plurality of reference signals;
receiving second information, and determining information about a first beam subset based on the second information, wherein the first beam subset belongs to the first beam set; and
receiving third information, and determining information about the first beam based on the third information, wherein the first beam belongs to the first beam subset.

2. The method according to claim 1, wherein the parameter of the first beam set comprises a mode of a first beam in the first beam set, and the mode of the first beam in the first beam set comprises at least one of the following:
a same first beam is used for uplink and downlink transmission, and separate first beams are used for uplink and downlink transmission.

3. The method according to claim 1 or 2, wherein the parameter of the first beam set further comprises an identifier of the first beam in the first beam set.

4. The method according to any one of claims 1 to 3, wherein the determining information about a first beam subset based on the second information comprises:
determining a type of the first beam in the first beam subset based on the second information, wherein the type comprises at least one of the following:
a first beam used for uplink and downlink transmission, a first beam used for uplink or downlink transmission, a first beam used for uplink transmission, and a first beam used for downlink transmission.

5. The method according to any one of claims 1 to 4, wherein the second information is carried in first media access control MAC control element MAC CE signaling.

6. The method according to claim 5, wherein the determining a type of the first beam in the first beam subset based on the second information comprises:
determining the type of the first beam in the first beam subset based on a logical channel identifier LCID corresponding to the first MAC CE signaling, wherein the type comprises at least one of the following:
the first beam used for uplink and downlink transmission, the first beam used for uplink or downlink transmission, the first beam used for uplink transmission, and the first beam used for downlink transmission.

7. The method according to claim 5, wherein the determining a type of the first beam in the first beam subset based on the second information comprises:
determining the type of the first beam in the first beam subset based on a first field in the first MAC CE signaling, wherein the type comprises at least one of the following:
the first beam used for uplink and downlink transmission, the first beam used for uplink or downlink transmission, the first beam used for uplink transmission, and the first beam used for downlink transmission.

8. The method according to any one of claims 2 to 7, wherein the method further comprises:
determining the type of the first beam in the first beam subset based on the mode of the first beam in the first beam set, wherein the type comprises at least one of the following:
the first beam used for uplink and downlink transmission, the first beam used for uplink or downlink transmission, the first beam used for uplink transmission, and the first beam used for downlink transmission.

9. The method according to any one of claims 1 to 8, wherein the method further comprises:
sending fourth information, wherein the fourth information comprises a first parameter, and the first parameter in the fourth information indicates whether an uplink beam and a downlink beam are reciprocal of each other.

10. The method according to claim 9, wherein the method further comprises:
determining the type of the first beam in the first beam subset based on the first parameter in the fourth information, wherein the type comprises at least one of the following:
the first beam used for uplink and downlink transmission, the first beam used for uplink or downlink transmission, the first beam used for uplink transmission, and the first beam used for downlink transmission.

11. The method according to any one of claims 4 to 10, wherein the method further comprises:
determining the type of the first beam in the first beam subset based on a second field in the first MAC CE signaling, wherein the type comprises at least one of the following:
the first beam used for uplink transmission and the first beam used for downlink transmission.

12. The method according to any one of claims 1 to 11, wherein the first MAC CE signaling further comprises an index of the first beam subset; and
the first MAC CE signaling further comprises a bitmap, and the bitmap indicates the first beam in the first beam subset.

13. The method according to any one of claims 1 to 12, wherein the method further comprises:
the first MAC CE signaling comprises one or two types of first beams; and the method further comprises:
determining, based on a third field in the first MAC CE signaling, that the first MAC CE signaling comprises the one or two types of first beams.

14. The method according to claim 13, wherein when the first MAC CE signaling comprises two types of first beams, the two types of first beams are:
the first beam used for uplink transmission and the first beam used for downlink transmission.

15. The method according to claim 14, wherein the method further comprises:
indicating, based on a first bit in the first MAC CE signaling, the first beam used for uplink transmission, and indicating, based on a second bit in the first MAC CE signaling, the first beam used for downlink transmission; or
indicating, based on a first bit in the first MAC CE signaling, the first beam used for downlink transmission, and indicating, based on a second bit in the first MAC CE signaling, the first beam used for uplink transmission.

16. The method according to claim 15, wherein the determining, based on a third field in the first MAC CE signaling, that the first MAC CE signaling comprises the one or two types of first beams comprises:
determining, based on the third field in the first MAC CE signaling, whether the second bit in the first MAC CE signaling exists.

17. The method according to claim 15 or 16, wherein the method further comprises:
determining, based on a fourth field in the first MAC CE signaling, whether the first bit in the first MAC CE signaling indicates the first beam used for uplink transmission or the first beam used for downlink transmission.

18. The method according to any one of claims 1 to 17, wherein the third information is carried in first downlink control information DCI, and the first DCI comprises at least one of the following fields:
a field for determining the type of the first beam, wherein the field comprises a DCI format identifier field; or
a field indicating a function of the first DCI, wherein the function of the first DCI comprises at least one of the following:
indicating the first beam, indicating scheduled data, and indicating the first beam and indicating scheduled data; or
a field indicating the identifier of the first beam; or
an activation or deactivation field, indicating that the first DCI is used to activate the first beam or deactivate the first beam; or
a carrier field, indicating at least one of the following:
a carrier corresponding to the first beam, a carrier group corresponding to the first beam, and a carrier group of the carrier corresponding to the first beam; or
a frequency band field, indicating a frequency band corresponding to the first beam; or
a bandwidth part BWP field, indicating a bandwidth part corresponding to the first beam; or
a physical uplink control channel PUCCH resource indicator field, indicating a PUCCH resource used to feed back ACK/NACK information of the first DCI; or
a HARQ feedback time indicator field, indicating a time interval between feeding back the ACK/NACK information of the first DCI and sending the first DCI.

19. The method according to claim 18, wherein when a first field in the first DCI is reused to indicate activation or deactivation of the first beam, the first field in the first DCI comprises at least one of the following:
a frequency domain resource allocation field, a time domain resource allocation field, a modulation and coding scheme MCS field, a new data information NDI field, a redundancy version RV field, a hybrid automatic repeat request HARQ process field, a data allocation identifier DAI field, a physical uplink control channel PUCCH resource field, a HARQ feedback time indicator field, an antenna port, and a demodulation reference signal DMRS sequence initialization field.

20. The method according to claim 18 or 19, wherein before the first DCI is received, the method further comprises:
receiving second DCI, wherein the second DCI indicates the first beam, and the second DCI is adjacent to the first DCI in terms of time.

21. The method according to claim 20, wherein when a first beam indicated by the first DCI is the same as the first beam indicated by the second DCI and a value of the NDI field is toggled, the first DCI indicates deactivation of the first beam; or
when a first beam indicated by the first DCI is different from the first beam indicated by the second DCI, the first DCI indicates activation of the first beam.

22. The method according to any one of claims 18 to 21, wherein after the first DCI is used to activate the first beam, the first beam takes effect within first duration for which a first moment is used as a start moment, wherein the first moment comprises any one of the following:
a slot or a symbol for sending the first DCI, a slot or a symbol for sending a HARQ feedback message corresponding to the first DCI, and a sum of the slot or the symbol for sending the HARQ feedback message corresponding to the first DCI and K milliseconds, wherein K≥1.

23. The method according to claim 22, wherein the method further comprises:
determining the first duration based on the first DCI; or
determining the first duration based on configuration information.

24. The method according to any one of claims 18 to 23, wherein the method further comprises:
sending fifth information when the first DCI comprises scheduling information for data transmission, wherein the fifth information is acknowledgment ACK/negative acknowledgment NACK information of data; or
sending sixth information when the first DCI does not comprise the scheduling information for data transmission, wherein the sixth information is the ACK/NACK information of the first DCI.

25. The method according to claim 24, wherein the method further comprises:
determining, based on a condition, whether the first DCI comprises the scheduling information for data transmission, wherein the condition comprises at least one of the following:
a value of the frequency domain resource allocation field in the first DCI is 0, and a value of the time domain resource allocation field in the first DCI is 0.

26. A wireless communication method, comprising:
sending first information, wherein the first information is for configuring a parameter of a first beam set, the first beam set comprises at least one first beam, and the first beam is a beam shared by a plurality of channels and/or a plurality of reference signals;
sending second information, wherein the second information is for determining information about a first beam subset, and the first beam subset belongs to the first beam set; and
sending third information, wherein the third information is for determining information about the first beam, and the first beam belongs to the first beam subset.

27. The method according to claim 26, wherein the parameter of the first beam set comprises a mode of the first beam in the first beam set, and the mode of the first beam in the first beam set comprises at least one of the following:
a same first beam is used for uplink and downlink transmission, and separate first beams are used for uplink and downlink transmission.

28. The method according to claim 26 or 27, wherein the parameter of the first beam set further comprises an identifier of the first beam in the first beam set.

29. The method according to any one of claims 26 to 28, wherein the second information is for determining a type of the first beam in the first beam subset, and the type comprises at least one of the following:
a first beam used for uplink and downlink transmission, a first beam used for uplink or downlink transmission, a first beam used for uplink transmission, and a first beam used for downlink transmission.

30. The method according to any one of claims 26 to 29, wherein the second information is carried in first media access control MAC control element CE signaling.

31. The method according to claim 30, wherein a logical channel identifier LCID corresponding to the first MAC CE signaling is for determining the type of the first beam in the first beam subset, and the type comprises at least one of the following:
the first beam used for uplink and downlink transmission, the first beam used for uplink or downlink transmission, the first beam used for uplink transmission, and the first beam used for downlink transmission.

32. The method according to claim 30, wherein a first field corresponding to the first MAC CE signaling is for determining the type of the first beam in the first beam subset, and the type comprises at least one of the following:
the first beam used for uplink and downlink transmission, the first beam used for uplink or downlink transmission, the first beam used for uplink transmission, and the first beam used for downlink transmission.

33. The method according to any one of claims 27 to 32, wherein the mode of the first beam in the first beam set is for determining the type of the first beam in the first beam subset, and the type comprises at least one of the following:
the first beam used for uplink and downlink transmission, the first beam used for uplink or downlink transmission, the first beam used for uplink transmission, and the first beam used for downlink transmission.

34. The method according to any one of claims 26 to 33, wherein the method further comprises:
receiving fourth information, wherein the fourth information comprises a first parameter, and the first parameter in the fourth information indicates whether an uplink beam and a downlink beam are reciprocal of each other.

35. The method according to claim 34, wherein the first parameter in the fourth information is for determining the type of the first beam in the group of first beams, and the type comprises at least one of the following:
the first beam used for uplink and downlink transmission, the first beam used for uplink or downlink transmission, the first beam used for uplink transmission, and the first beam used for downlink transmission.

36. The method according to any one of claims 31 to 35, wherein a second field in the first MAC CE signaling is for determining the type of the first beam in the first beam subset, and the type comprises at least one of the following:
the first beam used for uplink transmission and the first beam used for downlink transmission.

37. The method according to any one of claims 26 to 36, wherein the first MAC CE signaling further comprises an index of the first beam subset; or
the first MAC CE signaling further comprises a bitmap, and the bitmap indicates the first beam in the first beam subset.

38. The method according to any one of claims 26 to 37, wherein the first MAC CE signaling comprises one or two types of first beams, and a third field in the first MAC CE signaling is for determining that the first MAC CE signaling comprises the one or two types of first beams.

39. The method according to claim 38, wherein when the first MAC CE signaling comprises two types of first beams, the two types of first beams are:
the first beam used for uplink transmission and the first beam used for downlink transmission.

40. The method according to claim 39, wherein a first bit in the first MAC CE signaling indicates the first beam used for uplink transmission, and a second bit in the first MAC CE signaling indicates the first beam used for downlink transmission; or
a first bit in the first MAC CE signaling indicates the first beam used for downlink transmission, and a second bit in the first MAC CE signaling indicates the first beam used for uplink transmission.

41. The method according to claim 40, wherein the third field in the first MAC CE signaling is for determining whether the second bit in the first MAC CE signaling exists.

42. The method according to claim 40 or 41, wherein a fourth field in the first MAC CE signaling is for determining whether the first bit in the first MAC CE signaling indicates the first beam used for uplink transmission or the first beam used for downlink transmission.

43. The method according to any one of claims 26 to 42, wherein the third information is carried in first downlink control information DCI, and the first DCI comprises at least one of the following fields:
a field for determining the type of the first beam, wherein the field comprises a DCI format identifier field; or
a field indicating a function of the first DCI, wherein the function of the first DCI comprises at least one of the following:
indicating the first beam, indicating scheduled data, and indicating the first beam and indicating scheduled data; or
a field indicating the identifier of the first beam; or
an activation or deactivation field, indicating that the first DCI is used to activate the first beam or deactivate the first beam; or
a carrier field, indicating at least one of the following:
a carrier corresponding to the first beam, a carrier group corresponding to the first beam, and a carrier group of the carrier corresponding to the first beam; or
a frequency band field, indicating a frequency band corresponding to the first beam; or
a bandwidth part BWP field, indicating a bandwidth part corresponding to the first beam; or
a physical uplink control channel PUCCH resource indicator field, indicating a PUCCH resource used to feed back ACK/NACK information of the first DCI; or
a HARQ feedback time indicator field, indicating a time interval between feeding back the ACK/NACK information of the first DCI and sending the first DCI.

44. The method according to claim 43, wherein when a first field in the first DCI is reused to indicate activation or deactivation of the first beam, the first field in the first DCI comprises at least one of the following:
a frequency domain resource allocation field, a time domain resource allocation field, a modulation and coding scheme MCS field, a new data information NDI field, a redundancy version RV field, a hybrid automatic repeat request HARQ process field, a data allocation identifier DAI field, a physical uplink control channel PUCCH resource field, a HARQ feedback time indicator field, an antenna port, and a demodulation reference signal DMRS sequence initialization field.

45. The method according to claim 43 or 44, wherein before the first DCI is received, the method further comprises:
sending second DCI, wherein the second DCI indicates the first beam, and the second DCI is adjacent to the first DCI in terms of time.

46. The method according to claim 45, wherein when a first beam indicated by the first DCI is the same as the first beam indicated by the second DCI and a value of the NDI field is toggled, the first DCI indicates deactivation of the first beam; or
when a first beam indicated by the first DCI is different from the first beam indicated by the second DCI, the first DCI indicates activation of the first beam.

47. The method according to any one of claims 43 to 46, wherein after the first DCI is used to activate the first beam, the first beam takes effect within first duration for which a first moment is used as a start moment, wherein the first moment comprises any one of the following:
a slot or a symbol for sending the first DCI, a slot or a symbol for sending a HARQ feedback message corresponding to the first DCI, and a sum of the slot or the symbol for sending the HARQ feedback message corresponding to the first DCI and K milliseconds, wherein K≥1.

48. The method according to claim 47, wherein the first DCI comprises information about the first duration, and the first duration is determined based on configuration information.

49. The method according to any one of claims 43 to 48, wherein the method further comprises:
receiving fifth information when the first DCI comprises scheduling information for data transmission, wherein the fifth information is ACK/NACK information of data; or
receiving sixth information when the first DCI does not comprise the scheduling information for data transmission, wherein the sixth information is the ACK/NACK information of the first DCI.

50. The method according to claim 49, wherein a condition is for determining whether the first DCI comprises the scheduling information for data transmission, and the condition comprises at least one of the following:
a value of the frequency domain resource allocation field in the first DCI is 0, and a value of the time domain resource allocation field in the first DCI is 0.

51. A wireless communication method, comprising:
receiving fifth information, wherein the fifth information is for configuring a parameter of a second beam set, the second beam set comprises at least one second beam, and the second beam is a beam shared by a plurality of channels and/or a plurality of reference signals; and
receiving sixth information, and determining information about the one or more second beams based on the sixth information.

52. The method according to claim 51, wherein the parameter of the second beam set comprises a mode of a second beam in the second beam set, and the mode of the second beam in the second beam set comprises at least one of the following:
a same second beam is used for uplink and downlink transmission, and independent second beams are used for uplink and downlink transmission.

53. The method according to claim 51 or 52, wherein the parameter of the second beam set further comprises an identifier of the second beam in the second beam set.

54. The method according to any one of claims 51 to 53, wherein the determining information about the one or more second beams based on the sixth information comprises:
determining a type of the one or more second beams based on the sixth information, wherein the type of the one or more second beams comprises at least one of the following:
a second beam used for uplink and downlink transmission, a second beam used for uplink or downlink transmission, a second beam used for uplink transmission, and a second beam used for downlink transmission.

55. The method according to any one of claims 51 to 54, wherein the sixth information is carried in second MAC CE signaling.

56. The method according to claim 55, wherein the determining a type of the one or more second beams based on the sixth information comprises:
determining the type of the one or more second beams based on an LCID corresponding to the second MAC CE signaling, wherein the type of the one or more second beams comprises at least one of the following:
the second beam used for uplink and downlink transmission, the second beam used for uplink or downlink transmission, the second beam used for uplink transmission, and the second beam used for downlink transmission.

57. The method according to claim 55, wherein the determining a type of the one or more second beams based on the sixth information comprises:
determining the type of the one or more second beams based on a first field corresponding to the second MAC CE signaling, wherein the type of the one or more second beams comprises at least one of the following:
the second beam used for uplink and downlink transmission, the second beam used for uplink or downlink transmission, a first beam used for uplink transmission, and the second beam used for downlink transmission.

58. The method according to any one of claims 52 to 57, wherein the method further comprises:
determining the type of the one or more second beams based on the mode of the second beam, wherein the type of the one or more second beams comprises at least one of the following:
the second beam used for uplink and downlink transmission, the second beam used for uplink or downlink transmission, the second beam used for uplink transmission, and the second beam used for downlink transmission.

59. The method according to any one of claims 51 to 58, wherein the method further comprises:
sending seventh information, wherein the seventh information comprises a first parameter, and the first parameter in the seventh information indicates whether an uplink beam and a downlink beam are reciprocal of each other.

60. The method according to claim 59, wherein the method further comprises:
determining the type of the one or more second beams based on the first parameter in the seventh information, wherein the type of the one or more second beams comprises at least one of the following:
the second beam used for uplink and downlink transmission, the second beam used for uplink or downlink transmission, the second beam used for uplink transmission, and the second beam used for downlink transmission.

61. The method according to any one of claims 54 to 60, wherein the method further comprises:
determining the type of the one or more second beams based on a second field in the second MAC CE signaling, wherein the type of the one or more second beams comprises at least one of the following:
the second beam used for uplink transmission and the second beam used for downlink transmission.

62. The method according to any one of claims 51 to 61, wherein the second MAC CE signaling further comprises an index of the one or more second beams; or
the second MAC CE signaling further comprises a bitmap, and the bitmap indicates the one or more second beams.

63. The method according to any one of claims 51 to 62, wherein
the second MAC CE signaling comprises the one or more second beams of one or two types; and the method further comprises:
determining, based on a third field in the second MAC CE signaling, that the second MAC CE signaling comprises the one or more second beams of the one or two types.

64. The method according to claim 63, wherein when the second MAC CE signaling comprises the one or more second beams of two types, the one or more second beams of the two types are respectively:
the second beam used for uplink transmission and the second beam used for downlink transmission.

65. The method according to claim 64, wherein the method further comprises:
indicating, based on a first bit in the second MAC CE signaling, the second beam used for uplink transmission, and indicating, based on a second bit in the second MAC CE signaling, the second beam used for downlink transmission; or
indicating, based on a first bit in the second MAC CE signaling, the second beam used for downlink transmission, and indicating, based on a second bit in the second MAC CE signaling, the second beam used for uplink transmission.

66. The method according to claim 65, wherein the determining, based on a third field in the second MAC CE signaling, that the second MAC CE signaling comprises the one or more second beams of the one or two types comprises:
determining, based on the third field in the second MAC CE signaling, whether the second bit in the second MAC CE signaling exists.

67. The method according to claim 65 or 66, wherein the method further comprises:
determining, based on a fourth field in the second MAC CE signaling, whether the first bit in the second MAC CE signaling indicates the second beam used for uplink transmission or the second beam used for downlink transmission.

68. A wireless communication method, comprising:
sending fifth information, wherein the fifth information is for configuring a parameter of a second beam set, the second beam set comprises at least one second beam, and the second beam is a beam shared by a plurality of channels and/or a plurality of reference signals; and
sending sixth information, wherein the sixth information is for determining information about the one or more second beams.

69. The method according to claim 68, wherein the parameter of the second beam set comprises a mode of a second beam in the second beam set, and the mode of the second beam in the second beam set comprises at least one of the following:
a same second beam is used for uplink and downlink transmission, and independent second beams are used for uplink and downlink transmission.

70. The method according to claim 68 or 69, wherein the parameter of the second beam set further comprises an identifier of the second beam in the second beam set.

71. The method according to any one of claims 68 to 70, wherein the sixth information is for determining a type of the one or more second beams, and the type of the one or more second beams comprises at least one of the following:
a second beam used for uplink and downlink transmission, a second beam used for uplink or downlink transmission, a second beam used for uplink transmission, and a second beam used for downlink transmission.

72. The method according to any one of claims 68 to 71, wherein the sixth information is carried in second MAC CE signaling.

73. The method according to claim 72, wherein an LCID corresponding to the second MAC CE signaling is for determining the type of the one or more second beams, and the type of the one or more second beams comprises at least one of the following:
the second beam used for uplink and downlink transmission, a first beam used for uplink or downlink transmission, the second beam used for uplink transmission, and the second beam used for downlink transmission.

74. The method according to claim 72, wherein a first field corresponding to the second MAC CE is for determining the type of the one or more second beams, and the type of the one or more second beams comprises at least one of the following:
the second beam used for uplink and downlink transmission, the second beam used for uplink or downlink transmission, a first beam used for uplink transmission, and the second beam used for downlink transmission.

75. The method according to any one of claims 69 to 74, wherein the mode of the second beam is for determining the type of the one or more second beams, and the type of the one or more second beams comprises at least one of the following:
the second beam used for uplink and downlink transmission, the second beam used for uplink or downlink transmission, the second beam used for uplink transmission, and the second beam used for downlink transmission.

76. The method according to any one of claims 68 to 75, wherein the method further comprises:
receiving seventh information, wherein the seventh information comprises a first parameter, and the first parameter in the seventh information indicates whether an uplink beam and a downlink beam are reciprocal of each other.

77. The method according to claim 76, wherein the first parameter in the seventh information is for determining the type of the one or more second beams, and the type of the one or more second beams comprises at least one of the following:
the second beam used for uplink and downlink transmission, the second beam used for uplink or downlink transmission, the second beam used for uplink transmission, and the second beam used for downlink transmission.

78. The method according to any one of claims 71 to 77, wherein a second field in the second MAC CE signaling is for determining the type of the one or more second beams, and the type of the one or more second beams comprises at least one of the following:
the second beam used for uplink transmission and the second beam used for downlink transmission.

79. The method according to any one of claims 68 to 78, wherein the second MAC CE signaling further comprises an index of the one or more second beams; or
the second MAC CE signaling further comprises a bitmap, and the bitmap indicates the one or more second beams.

80. The method according to any one of claims 68 to 79, wherein the second MAC CE signaling comprises the one or more second beams of one or two types, and a third field in the second MAC CE signaling is for determining that the second MAC CE signaling comprises the one or more second beams of the one or two types.

81. The method according to claim 80, wherein when the second MAC CE signaling comprises the one or more second beams of two types, the one or more second beams of the two types are respectively:
the second beam used for uplink transmission and the second beam used for downlink transmission.

82. The method according to claim 81, wherein a first bit in the second MAC CE signaling indicates the second beam used for uplink transmission, and a second bit in the second MAC CE signaling indicates the second beam used for downlink transmission; or
a first bit in the second MAC CE signaling indicates the second beam used for downlink transmission, and a second bit in the second MAC CE signaling indicates the second beam used for uplink transmission.

83. The method according to claim 82, wherein the third field in the second MAC CE signaling is for determining whether the second bit in the second MAC CE signaling exists.

84. The method according to claim 81 or 82, wherein a fourth field in the second MAC CE signaling is for determining whether the first bit in the second MAC CE signaling indicates the second beam used for uplink transmission or the second beam used for downlink transmission.

85. A communication apparatus, comprising:
a memory, configured to store computer instructions; and
a processor, configured to execute the computer instructions stored in the memory, so that the communication apparatus performs the method according to any one of claims 1 to 25, the method according to any one of claims 26 to 50, the method according to any one of claims 51 to 67, or the method according to any one of claims 68 to 84.

86. A computer-readable storage medium, wherein the computer-readable storage medium stores a computer program, and when the computer program is executed by a communication apparatus, the communication apparatus is enabled to perform the method according to any one of claims 1 to 25, the method according to any one of claims 26 to 50, the method according to any one of claims 51 to 67, or the method according to any one of claims 68 to 84.
